(19) **Europäisches Patentamt European Patent Office Office européen des brevets**

(11) **EP 4 550 818 A1**

(12) **EUROPEAN PATENT APPLICATION**
published in accordance with Art. 153(4) EPC

(43) Date of publication:
07.05.2025 Bulletin 2025/19

(21) Application number: 23831072.6

(22) Date of filing: 13.06.2023

(51) International Patent Classification (IPC):
*H04N 23/66* (2023.01)    *G03B 15/00* (2021.01)
*G03B 35/08* (2021.01)    *H04N 23/60* (2023.01)
*H04N 23/65* (2023.01)    *H04N 23/743* (2023.01)

(52) Cooperative Patent Classification (CPC):
G03B 15/00; G03B 35/08; H04N 23/60;
H04N 23/65; H04N 23/66; H04N 23/743

(86) International application number:
PCT/JP2023/021836

(87) International publication number:
WO 2024/004624 (04.01.2024 Gazette 2024/01)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.06.2022 JP 2022105924

(71) Applicant: **Sony Semiconductor Solutions
Corporation
Atsugi-shi, Kanagawa 243-0014 (JP)**

(72) Inventors:
• **MITSUHASHI,Takuya
Atsugi-shi, Kanagawa 243-0014 (JP)**
• **HOSOTANI, Akira
Atsugi-shi, Kanagawa 243-0014 (JP)**
• **HASHIMOTO, Tetsuro
Atsugi-shi, Kanagawa 243-0014 (JP)**
• **KOBAYASHI, Kazuhito
Atsugi-shi, Kanagawa 243-0014 (JP)**

(74) Representative: **MFG Patentanwälte
Meyer-Wildhagen Meggle-Freund
Gerhard PartG mbB
Amalienstraße 62
80799 München (DE)**

(54) **IMAGING DEVICE, IMAGING METHOD, AND PROGRAM**

(57)    The present technology relates to an imaging apparatus, an imaging method, and a program which, in the case of imaging using a plurality of imaging apparatuses, allow imaging in which the centers of exposure of the respective imaging apparatuses synchronize with each other and allow acquisition of a synthesized image in which a blur is suppressed.

An imaging apparatus includes a receiving section which receives a signal indicating a timing at which imaging by another sensor has reached the center of exposure and a setting section which sets, by employing a clock time at which the signal is received as the basis, a clock time at which a synchronization signal to make an instruction to start readout of a frame is generated. The center of exposure is located at the center in the horizontal direction in a picked up image and is located at a freely-selected position in the vertical direction. The present technology can be applied to an imaging apparatus in the case of performing imaging by a plurality of imaging apparatuses.

FIG.9

**Description**

[Technical Field]

The present technology relates to an imaging apparatus, an imaging method, and a program, and relates to, for example, an imaging apparatus, an imaging method, and a program configured such that, in the case of imaging by a plurality of cameras, the centers of exposure in the respective cameras are synchronized with each other.

[Background Art]

For example, there has been proposed a technology in which a plurality of imaging apparatuses which can perform imaging alone are used to perform stereoscopic imaging or simultaneously perform imaging of a plurality of images with different angles of view.
There has been proposed a technology which allows a plurality of imaging apparatuses to be used more effectively by performing imaging with synchronization among the plurality of imaging apparatuses or causing each of the imaging apparatuses to independently perform imaging (for example, refer to PTL 1).

[Citation List]

[Patent Literature]

[PTL 1]
Japanese Patent Laid-open No. 2018-191248

[Summary]

[Technical Problem]

In the case of performing imaging using a plurality of imaging apparatuses, if the centers of exposure are not aligned, there is a possibility that an image with a blur in a subject is obtained and the image quality lowers, for example, when a synthesized image is generated. It is desired to allow imaging with synchronization of the center of exposure in each of the imaging apparatuses.
The present technology has been made in view of such a situation and allows imaging in which the centers of exposure are aligned.

[Solution to Problem]

An imaging apparatus according to an aspect of the present technology is an imaging apparatus including a receiving section which receives a signal indicating a timing at which imaging by another sensor has reached a center of exposure, from the other sensor, and a setting section which sets, by employing a clock time at which the signal is received as a basis, a clock time at which a synchronization signal to make an instruction to start readout of a frame is generated.
An imaging method according to an aspect of the present technology is an imaging method executed by an imaging apparatus, the method including receiving a signal indicating a timing at which imaging by another sensor has reached a center of exposure, from the other sensor, and setting, by employing a clock time at which the signal is received as a basis, a clock time at which a synchronization signal to make an instruction to start readout of a frame is generated.
A program according to an aspect of the present technology is a program for causing a computer which controls an imaging apparatus, to perform processing including steps of receiving a signal indicating a timing at which imaging by another sensor has reached a center of exposure, from the other sensor, and setting, by employing a clock time at which the signal is received as a basis, a clock time at which a synchronization signal to make an instruction to start readout of a frame is generated.
In the imaging apparatus, the imaging method, and the program according to the aspects of the present technology, a signal indicating a timing at which imaging by another sensor has reached a center of exposure is received, and by employing a clock time at which the signal is received as a basis, a clock time at which a synchronization signal to make an instruction to start readout of a frame is generated is set.
It is to be noted that the imaging apparatus may be an independent apparatus or be an internal block included in one apparatus.
It is to be noted that the program can be provided by being transmitted through a transmission medium or by being recorded in a recording medium.

[Brief Description of Drawings]

[FIG. 1]

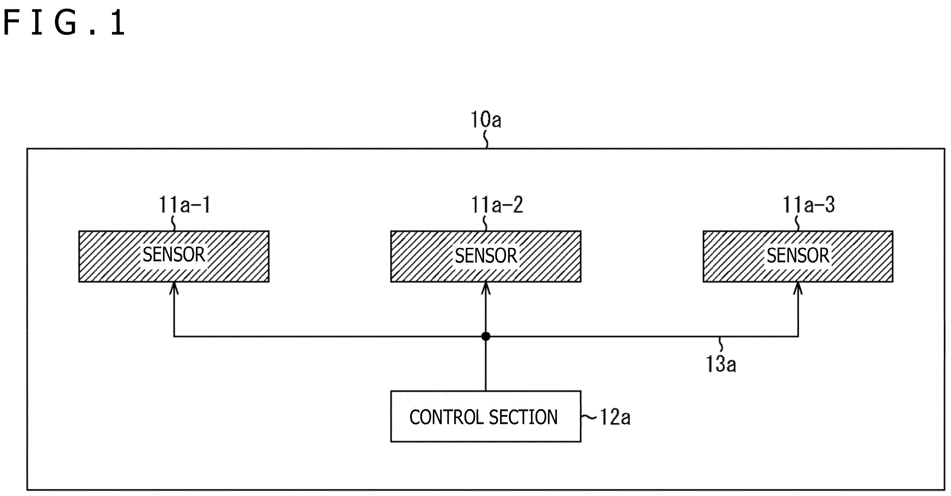

FIG. 1 is a view depicting a configuration of an embodiment of an imaging apparatus to which the present technology is applied.
[FIG. 2]

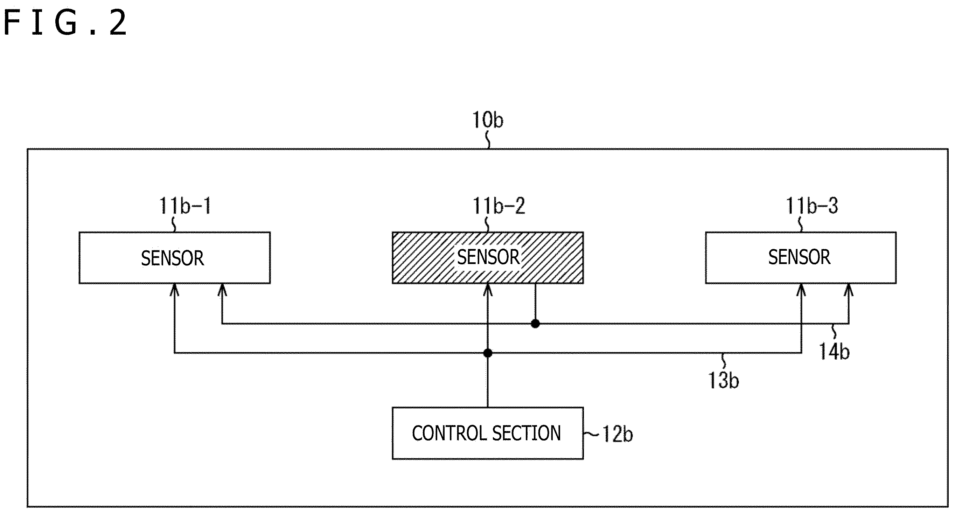

FIG. 2 is a view depicting a configuration example of the imaging apparatus.
[FIG. 3]

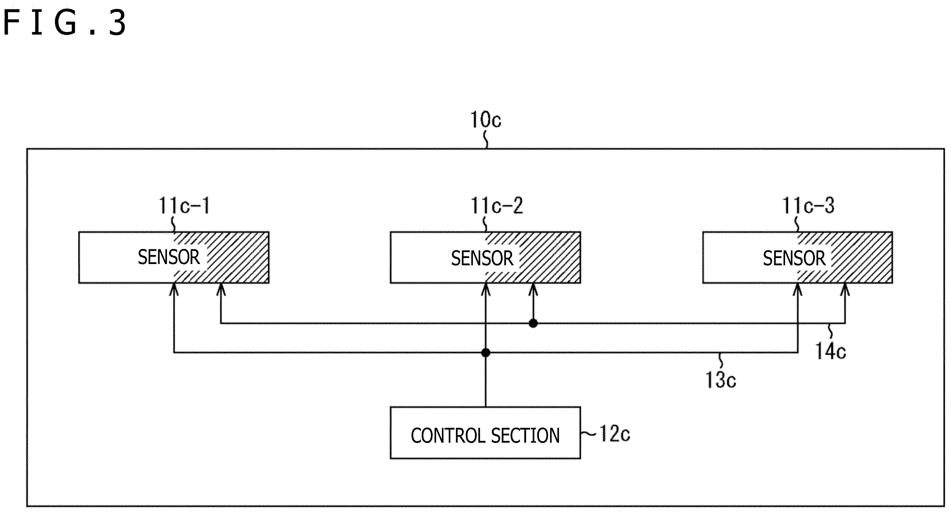

FIG. 3 is a view depicting a configuration example of the imaging apparatus.
[FIG. 4]

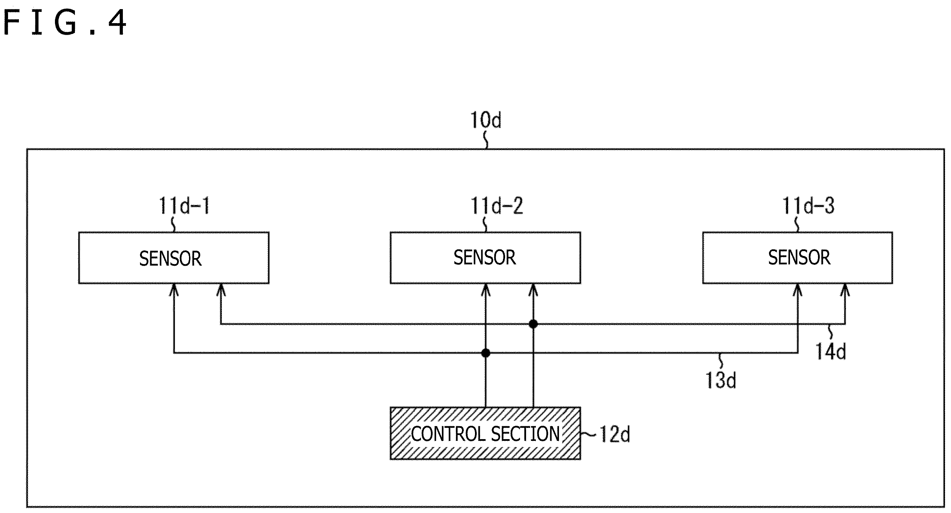

FIG. 4 is a view depicting a configuration example of the imaging apparatus.
[FIG. 5]

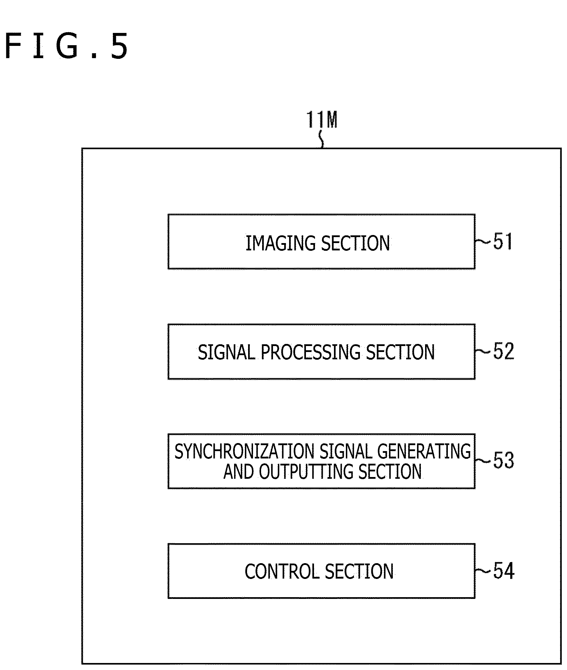

FIG. 5 is a view depicting a configuration example of a sensor.
[FIG. 6]

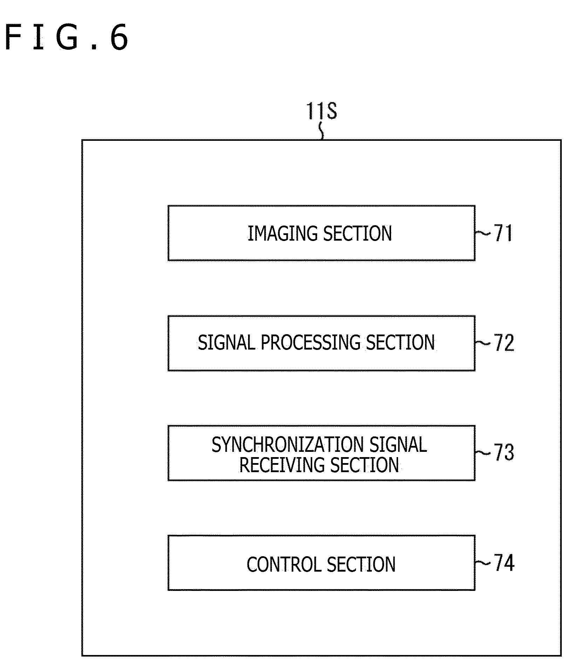

FIG. 6 is a view depicting a configuration example of the sensor.
[FIG. 7]

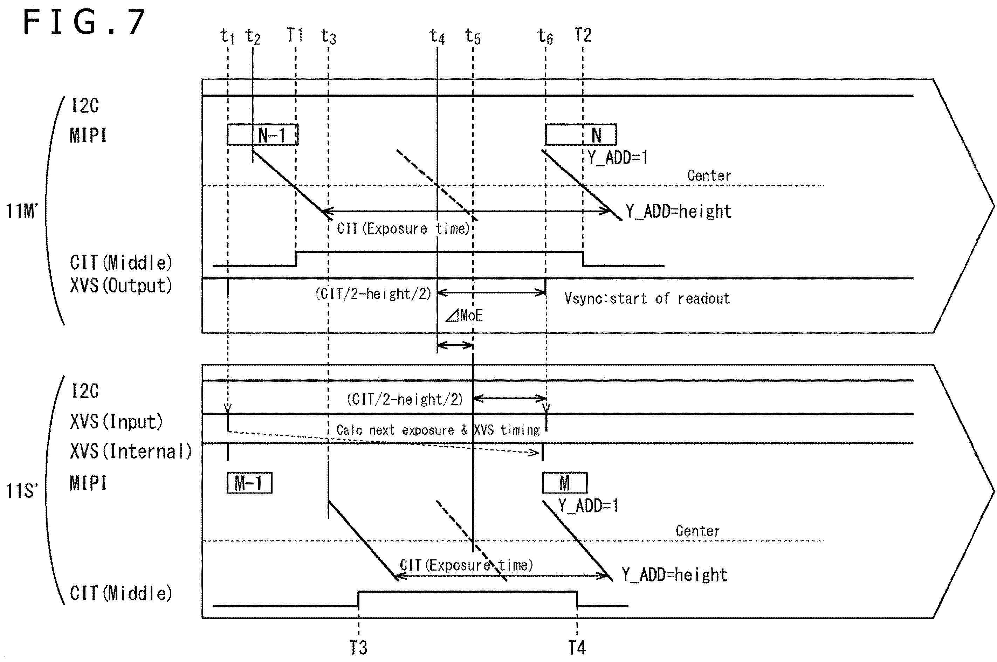

FIG. 7 is a view for explaining the case in which imaging is performed without aligning centers of exposure.
[FIG. 8]

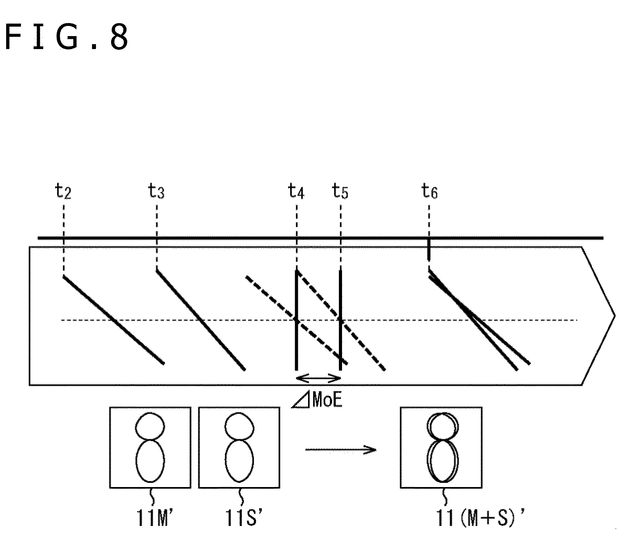

FIG. 8 is a view for explaining the case in which imaging is performed without aligning the centers of exposure.
[FIG. 9]

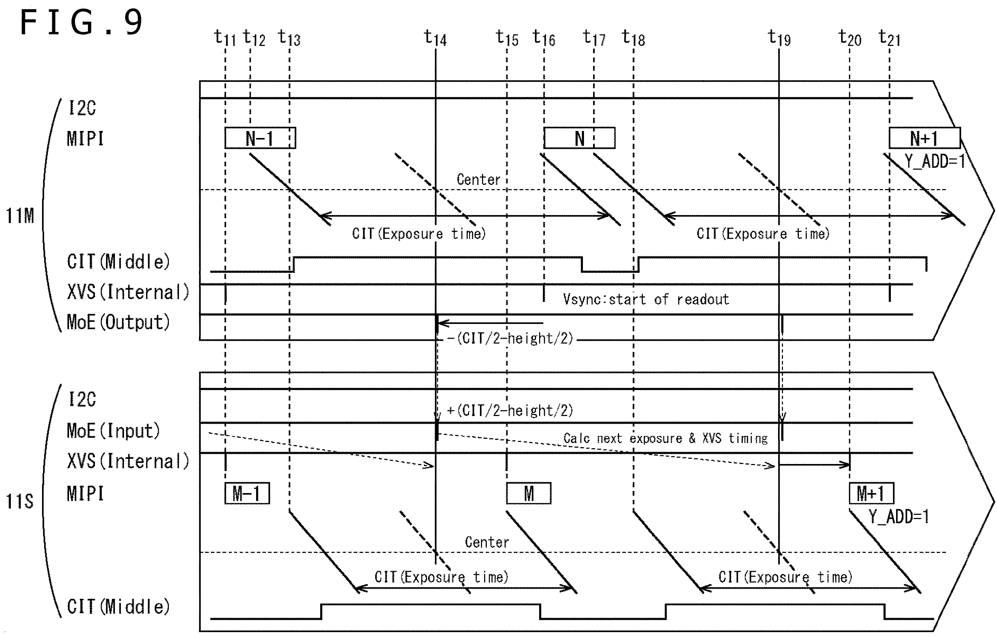

FIG. 9 is a view for explaining the case in which imaging is performed such that the centers of exposure are aligned.
[FIG. 10]

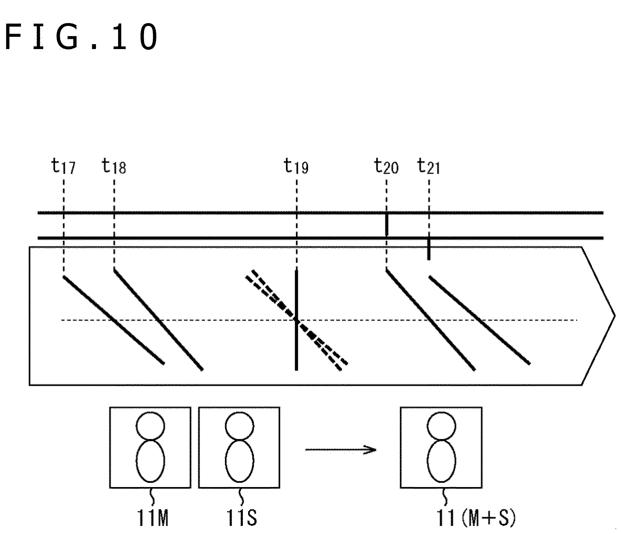

FIG. 10 is a view for explaining the case in which imaging is performed such that the centers of exposure are aligned.
[FIG. 11]

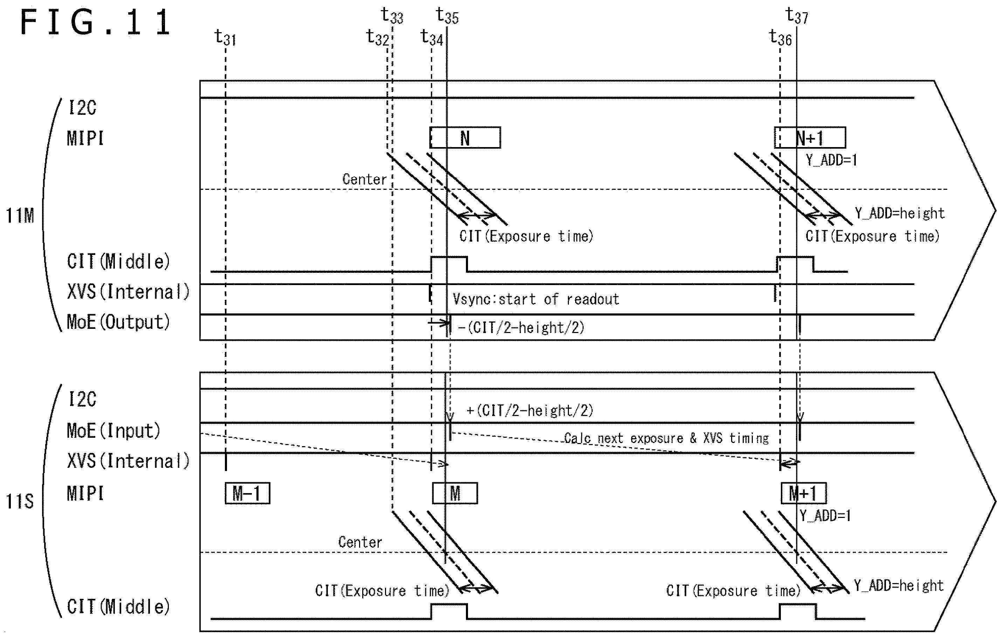

FIG. 11 is a view for explaining the case of aligning the centers of exposure.
[FIG. 12]

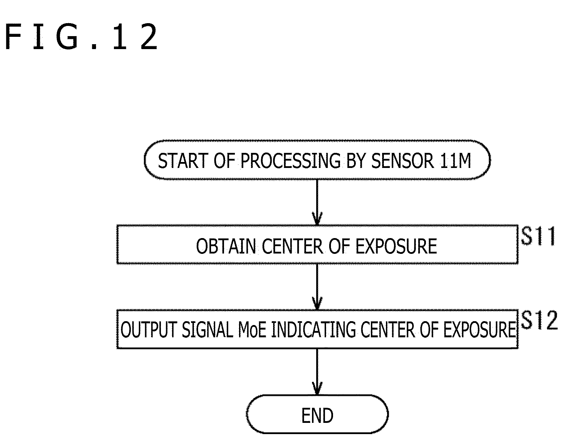

FIG. 12 is a flowchart for explaining processing by a sensor on a master side.
[FIG. 13]

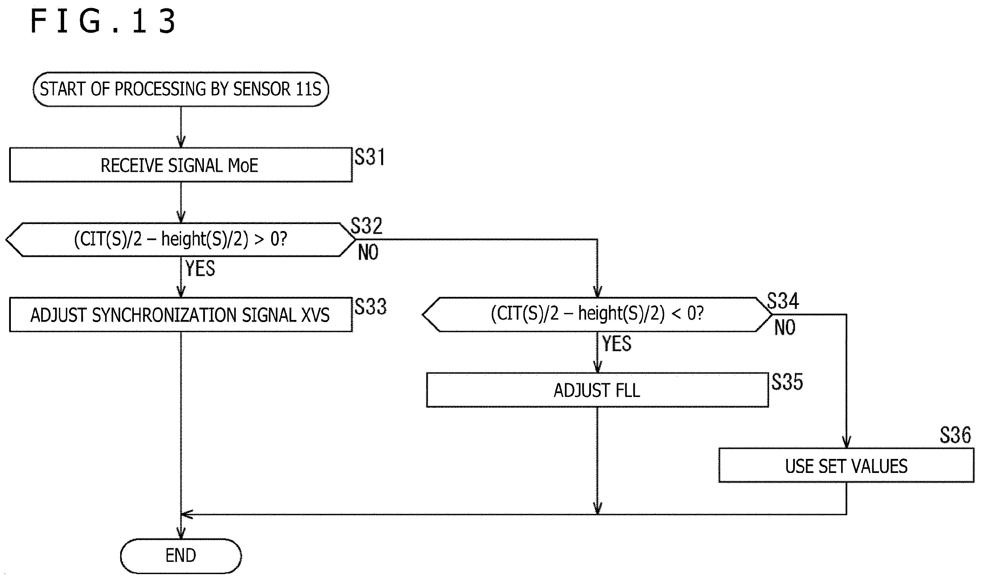

FIG. 13 is a flowchart for explaining processing by a sensor on a slave side.
[FIG. 14]

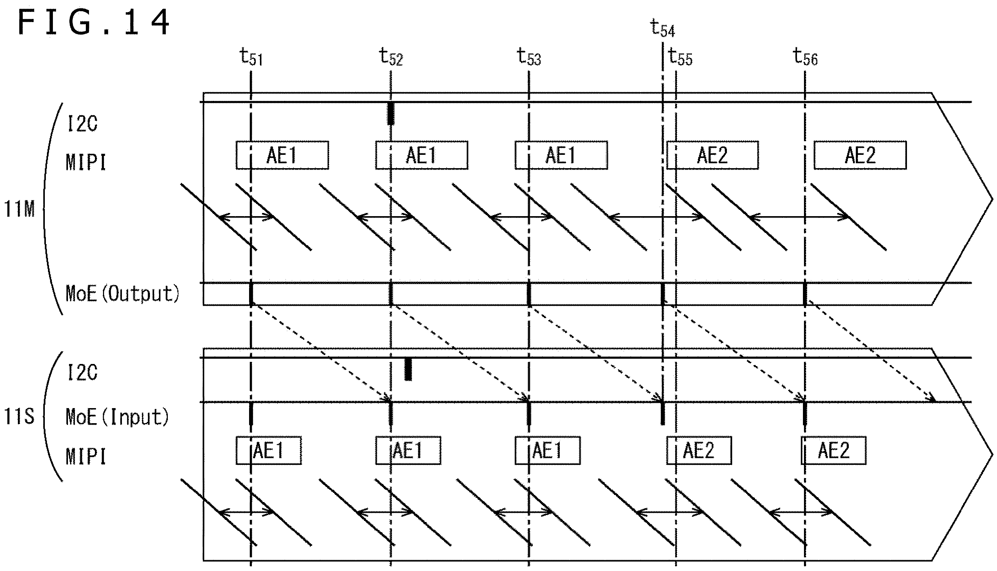

FIG. 14 is a view for explaining a deviation in the center of exposure at the time of command processing.
[FIG. 15]

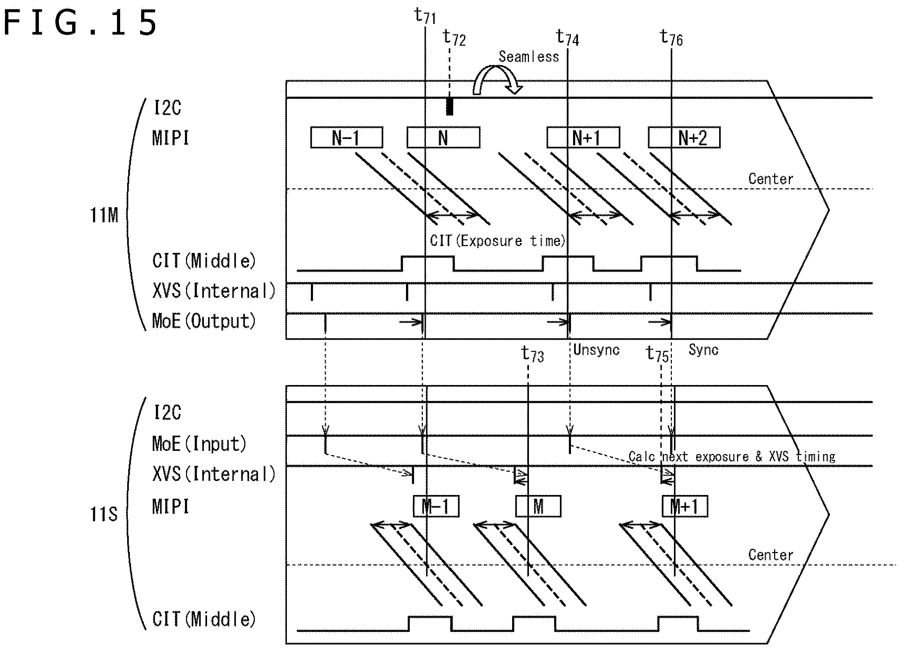

FIG. 15 is a view for explaining processing of aligning the centers of exposure at the time of mode conversion.
[FIG. 16]

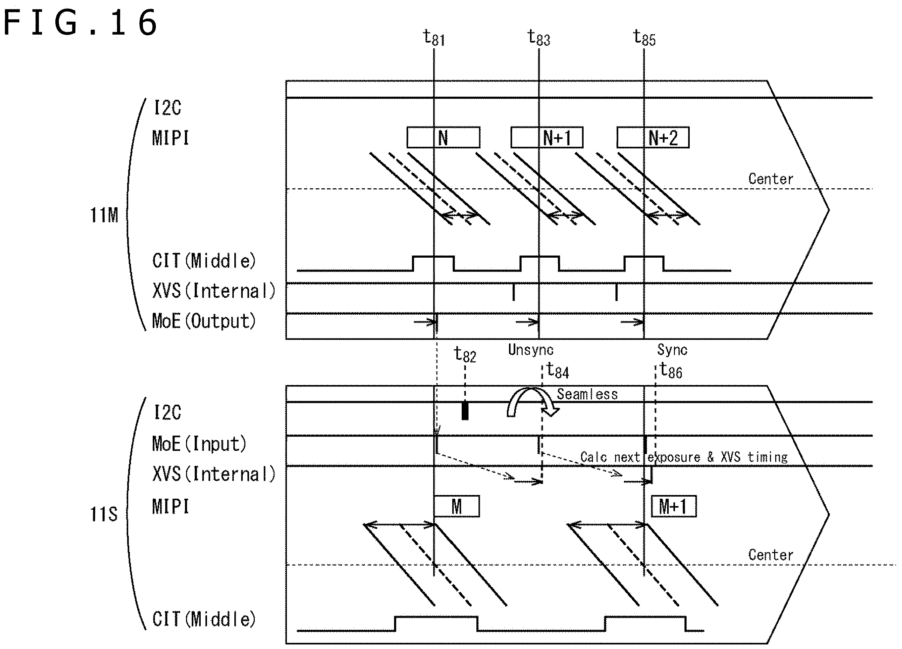

FIG. 16 is a view for explaining processing of aligning the centers of exposure at the time of mode conversion.
[FIG. 17]

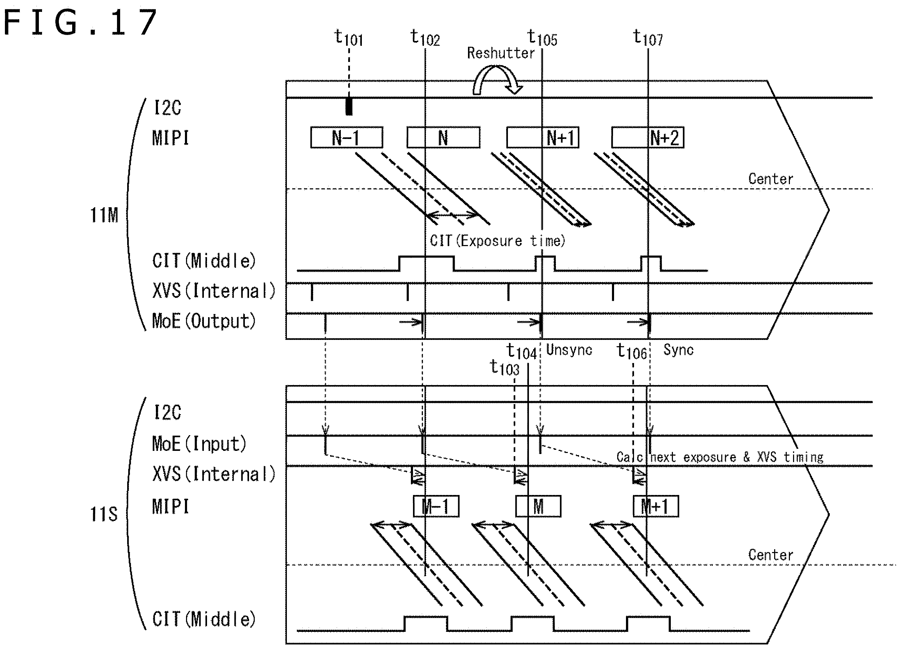

FIG. 17 is a view for explaining processing of aligning the centers of exposure at the time of mode change.
[FIG. 18]

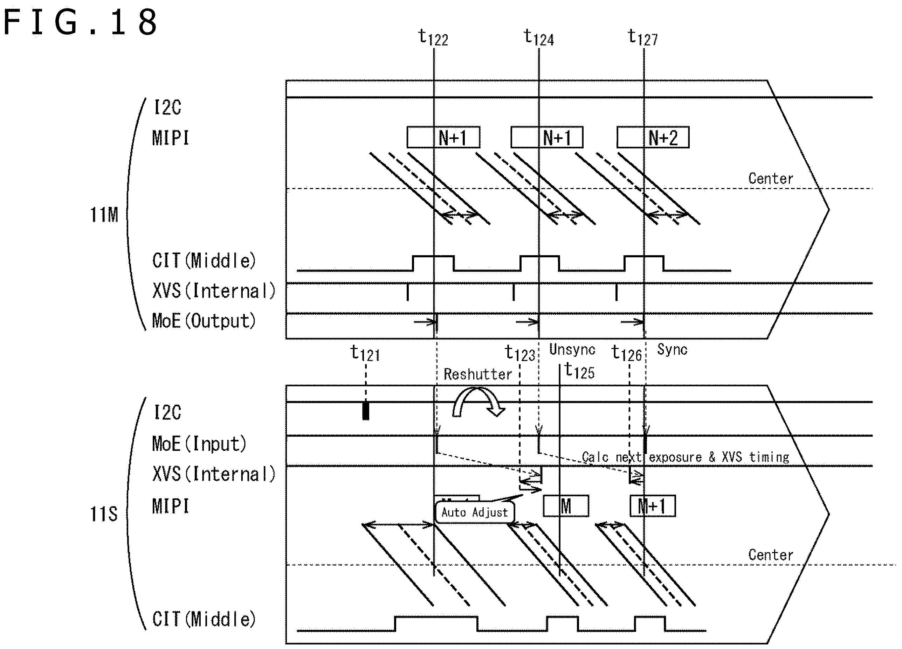

FIG. 18 is a view for explaining processing of aligning the centers of exposure at the time of mode change.
[FIG. 19]

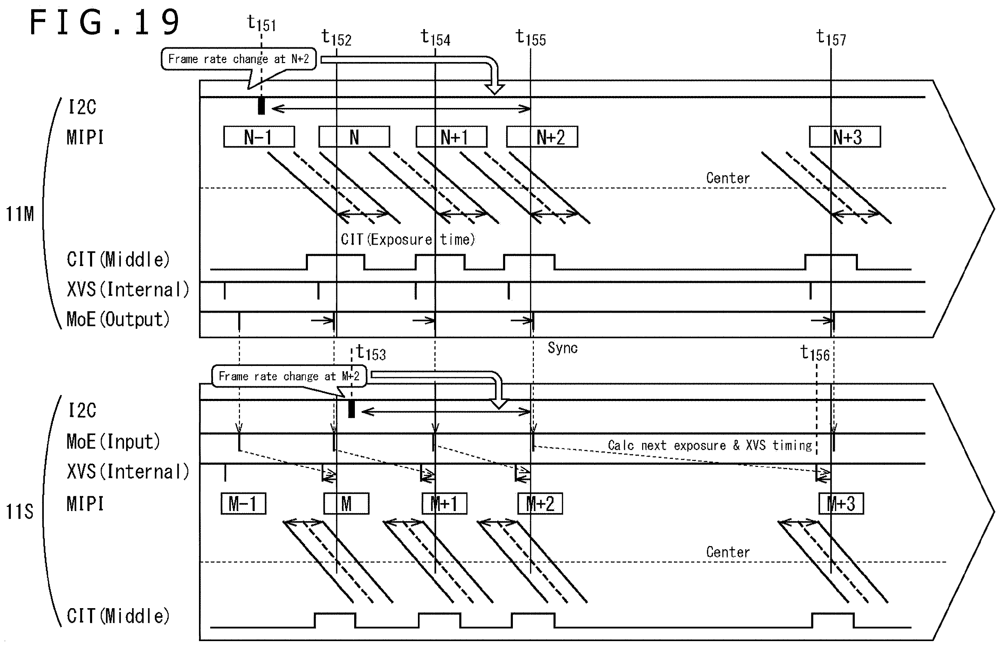

FIG. 19 is a view for explaining the case of aligning reflection timings of a command and the centers of exposure.
[FIG. 20]

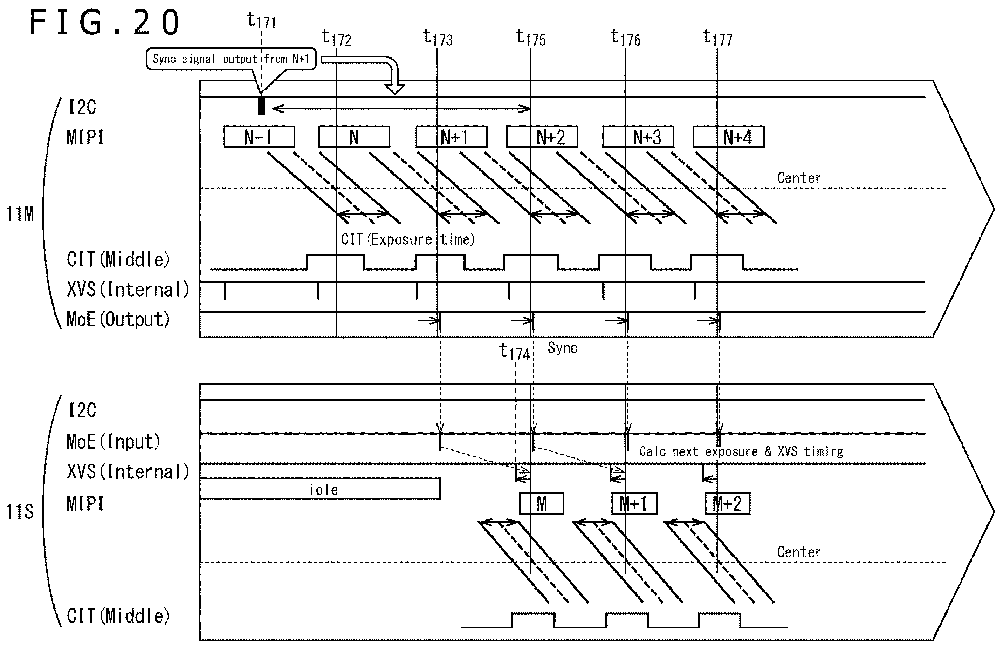

FIG. 20 is a view for explaining the case of aligning the centers of exposure from an idle state.
[FIG. 21]

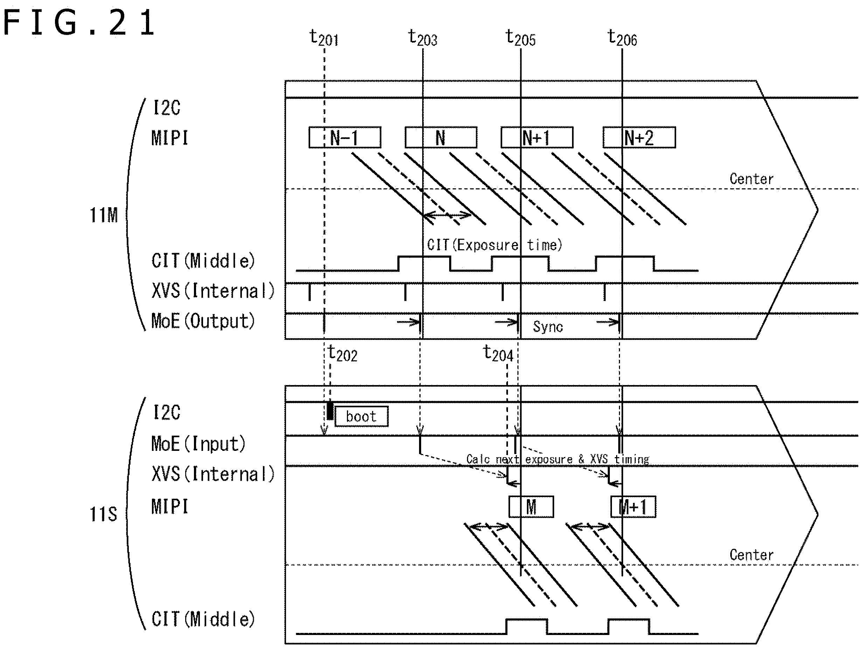

FIG. 21 is a view for explaining the case of aligning the centers of exposure from the idle state.
[FIG. 22]

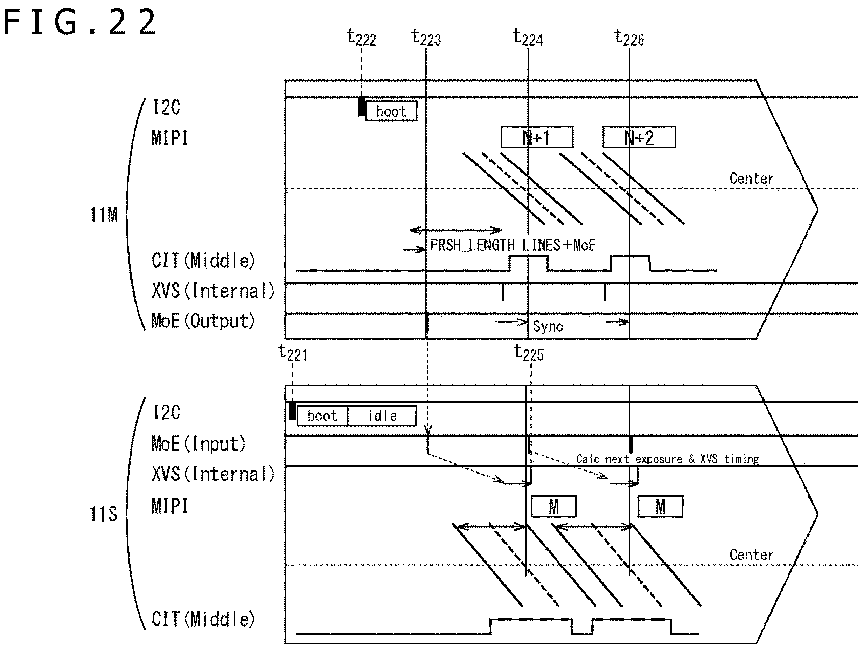

FIG. 22 is a view for explaining the case of aligning the centers of exposure by using a pre-shutter synchronization signal.
[FIG. 23]

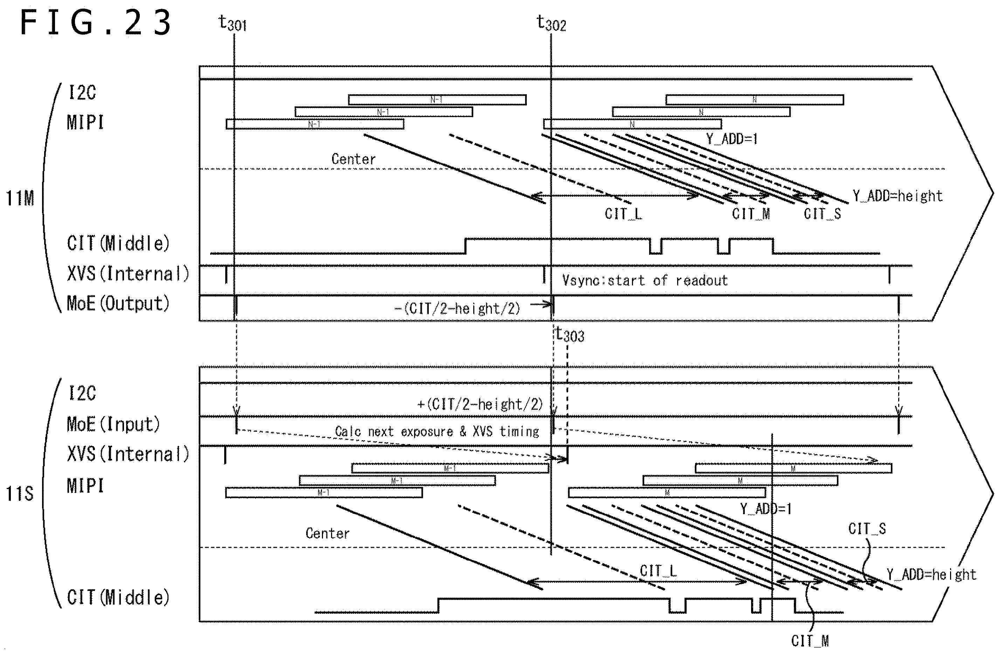

FIG. 23 is a view for explaining the case of aligning the centers of exposure during multi-frame imaging.
[FIG. 24]

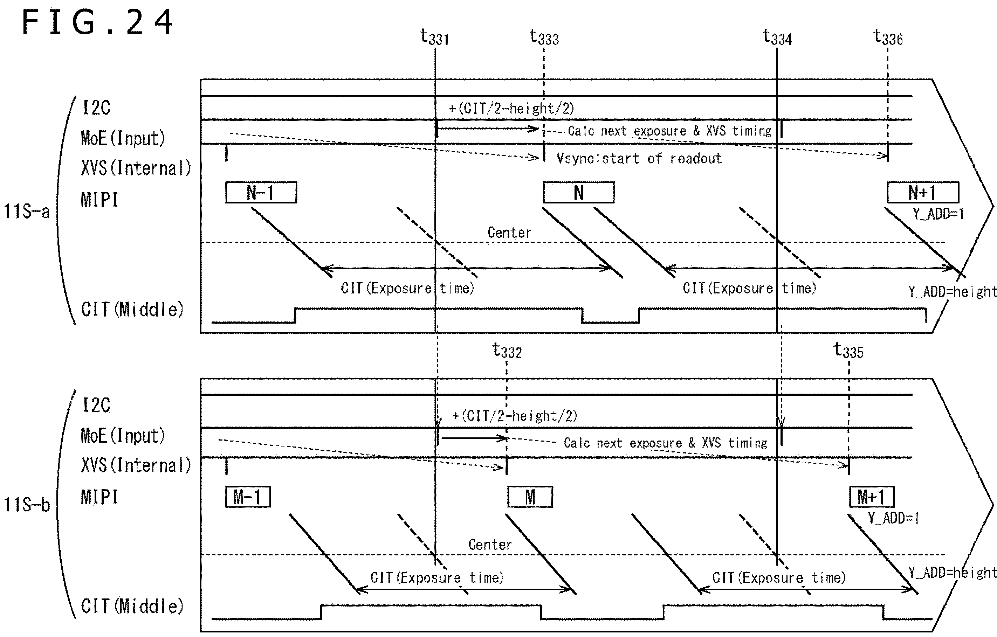

FIG. 24 is a view for explaining the case of aligning the centers of exposure by control by a control section.
[FIG. 25]

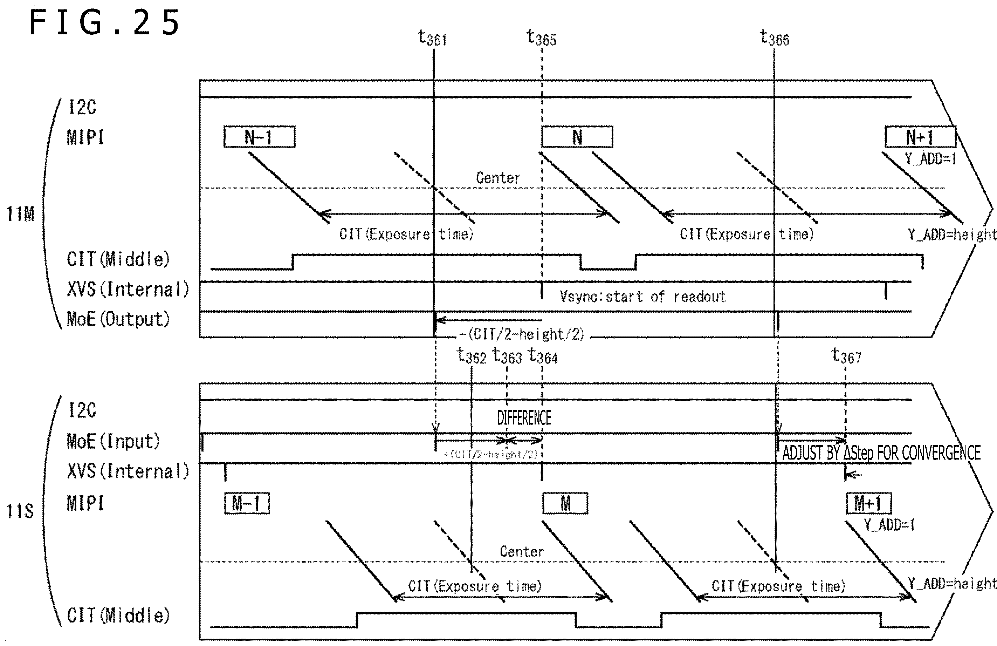

FIG. 25 is a view for explaining the case of aligning the centers of exposure between sensors which are autonomously operating.
[FIG. 26]

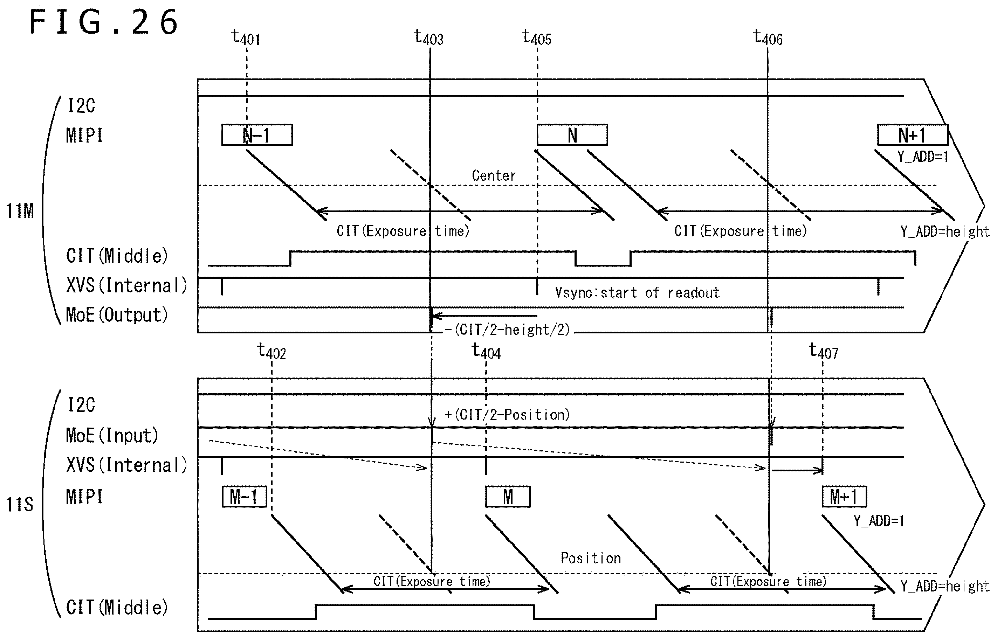

FIG. 26 is a view for explaining the case of aligning the centers of exposure at a freely-selected position.
[FIG. 27]

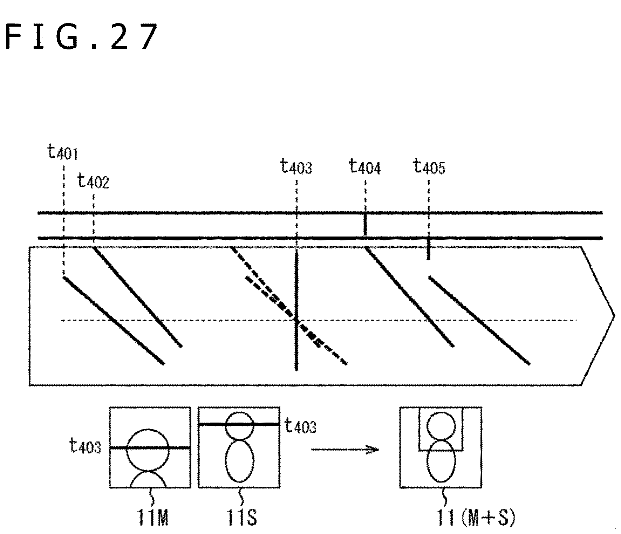

FIG. 27 is a view for explaining the case of aligning the centers of exposure at the freely-selected position.
[FIG. 28]

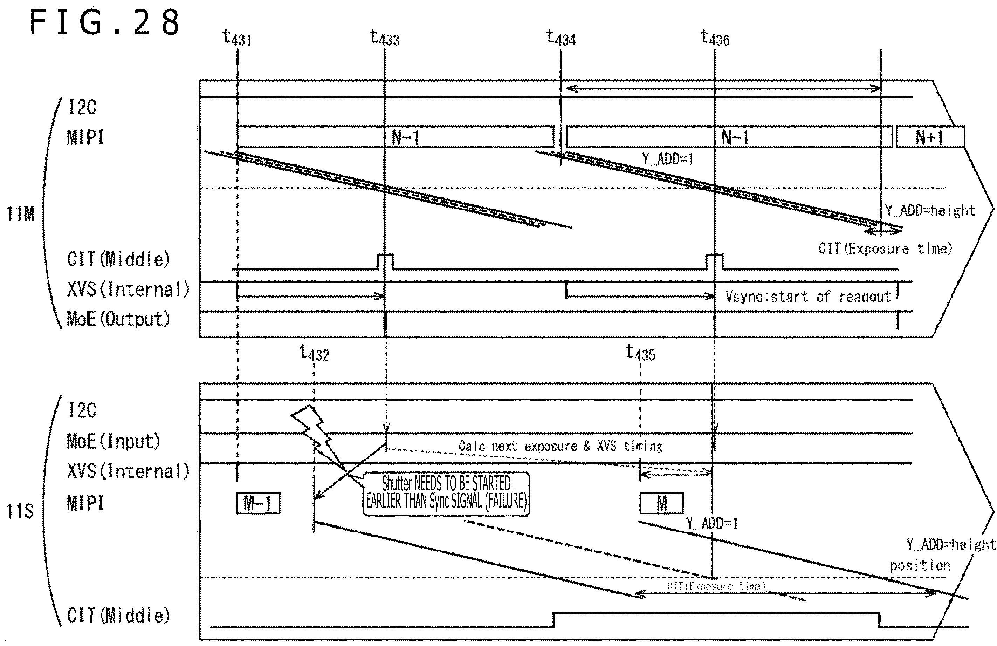

FIG. 28 is a view for explaining the case in which failure of imaging operation occurs.
[FIG. 29]

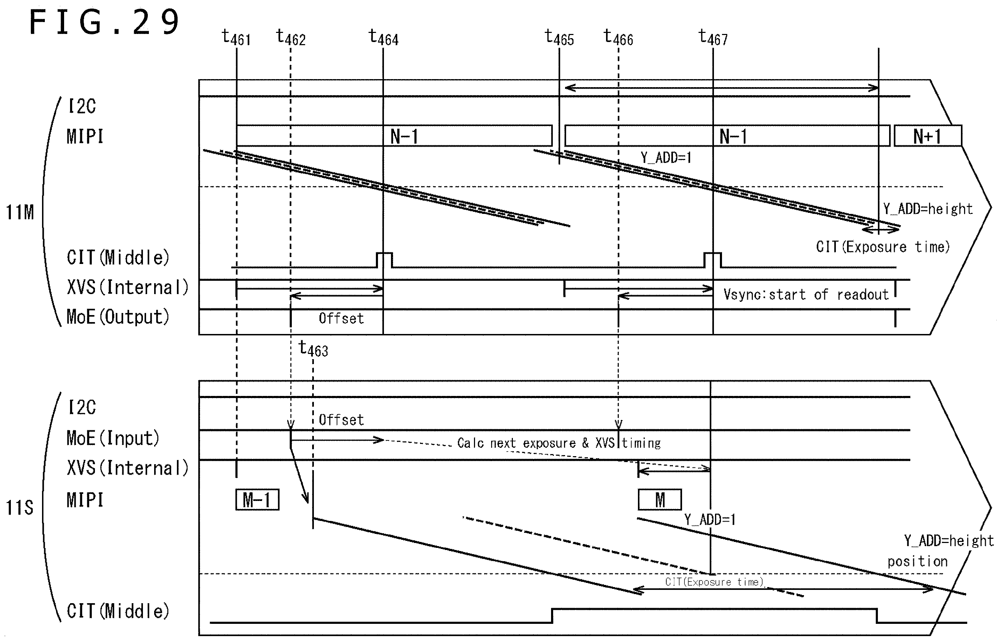

FIG. 29 is a view for explaining synchronization of the center of exposure using an offset.
[FIG. 30]

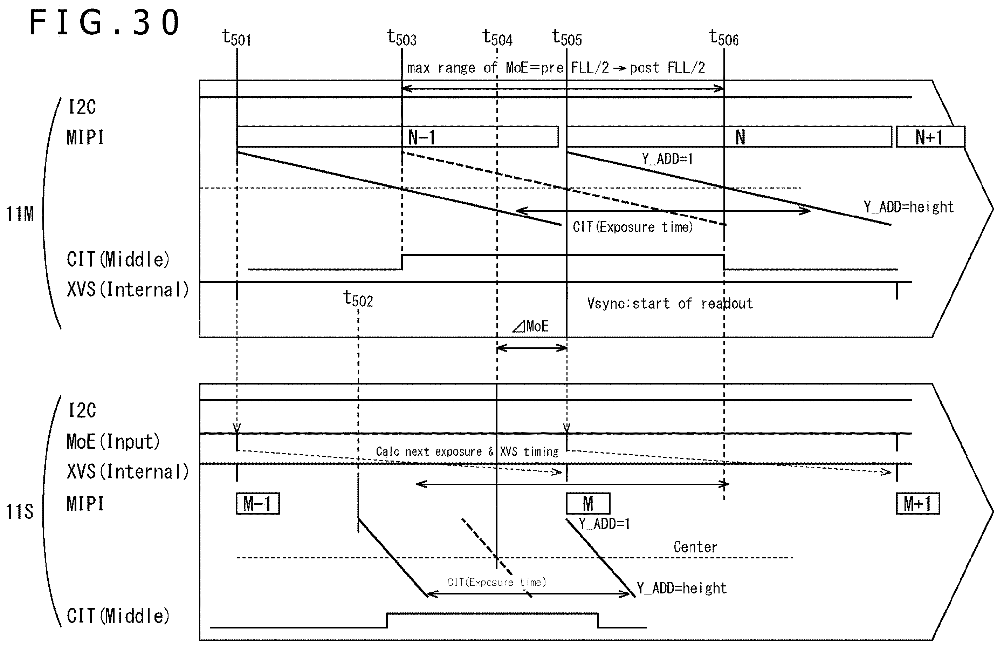

FIG. 30 is a view for explaining a range of the center of exposure.
[FIG. 31]

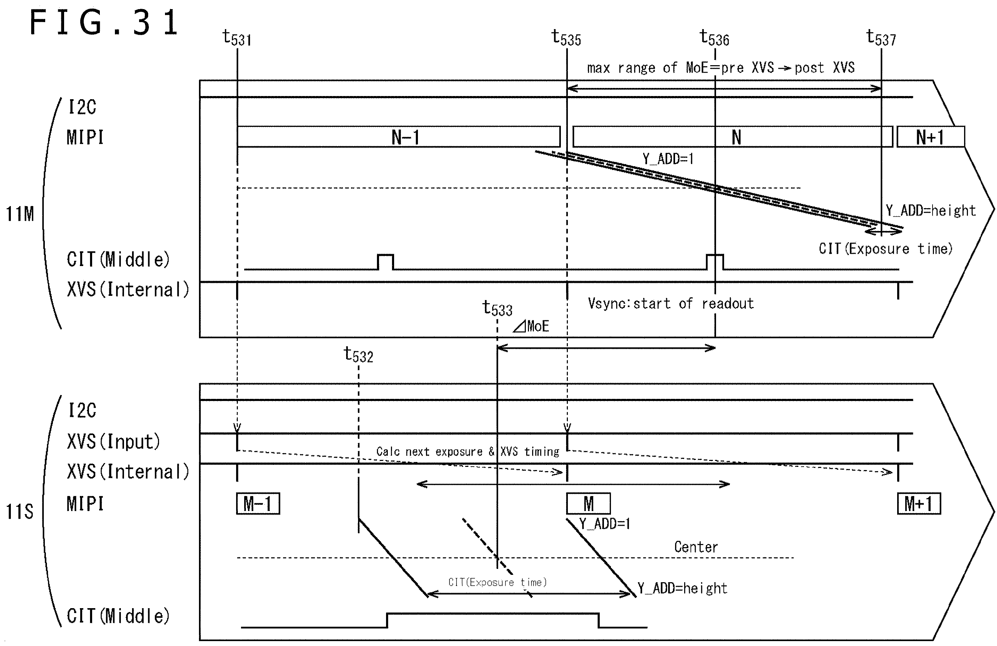

FIG. 31 is a view for explaining the range of the center of exposure.
[FIG. 32]

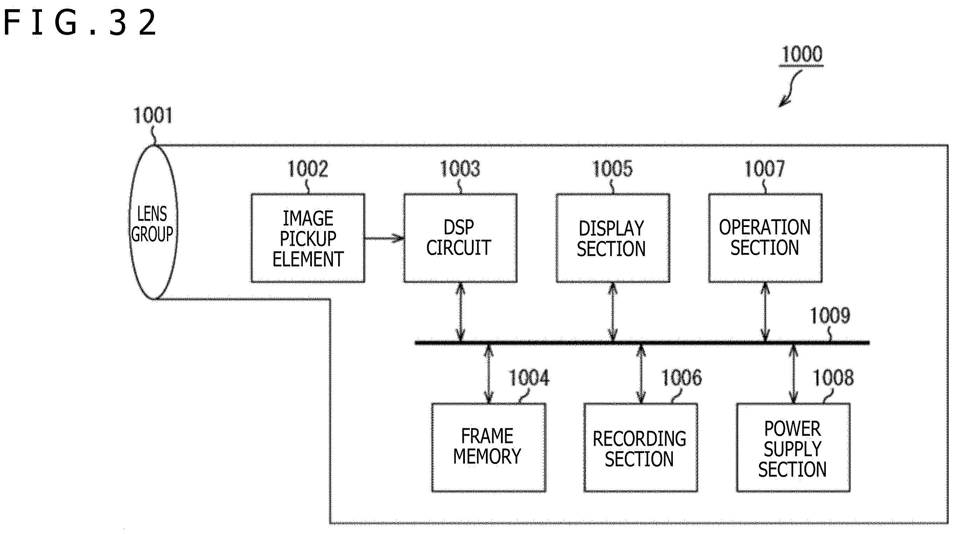

FIG. 32 is a view depicting a configuration example of electronic equipment.
[FIG. 33]

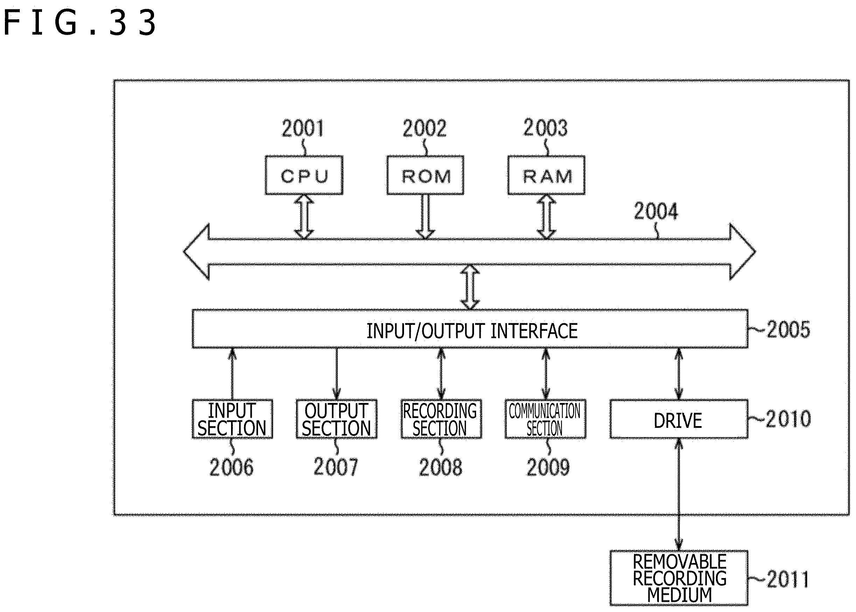

FIG. 33 is a view depicting a configuration example of a personal computer.
[FIG. 34]

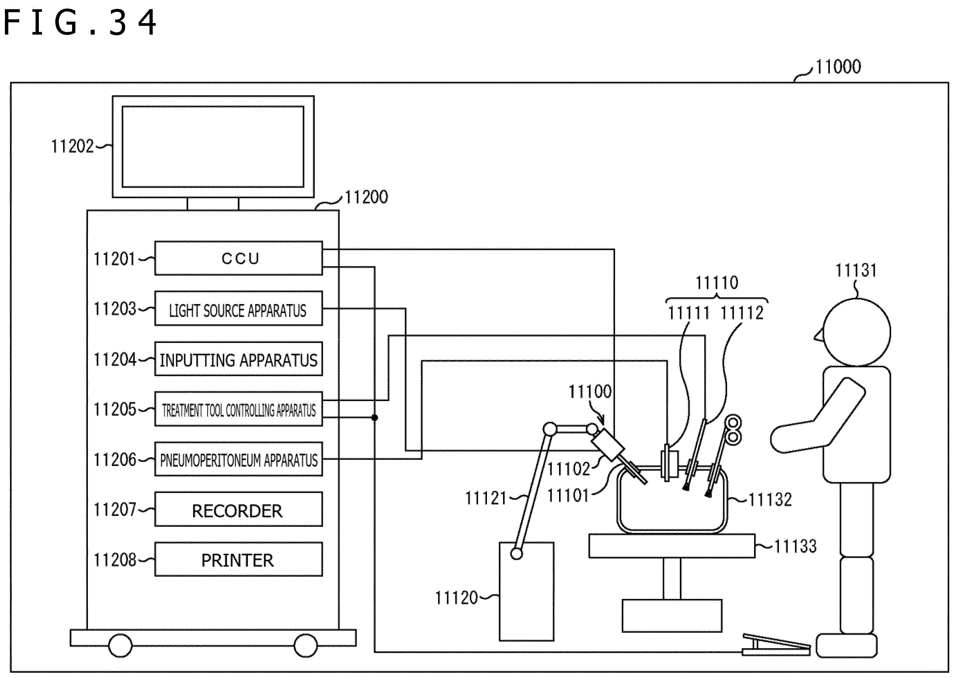

FIG. 34 is a view depicting an example of a schematic configuration of an endoscopic surgery system.
[FIG. 35]

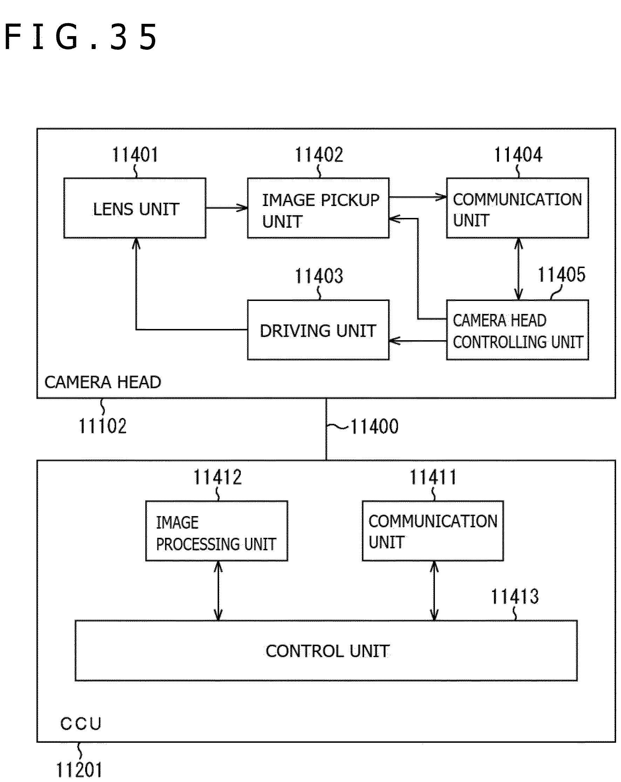

FIG. 35 is a block diagram depicting an example of a functional configuration of a camera head and a camera control unit (CCU).
[FIG. 36]

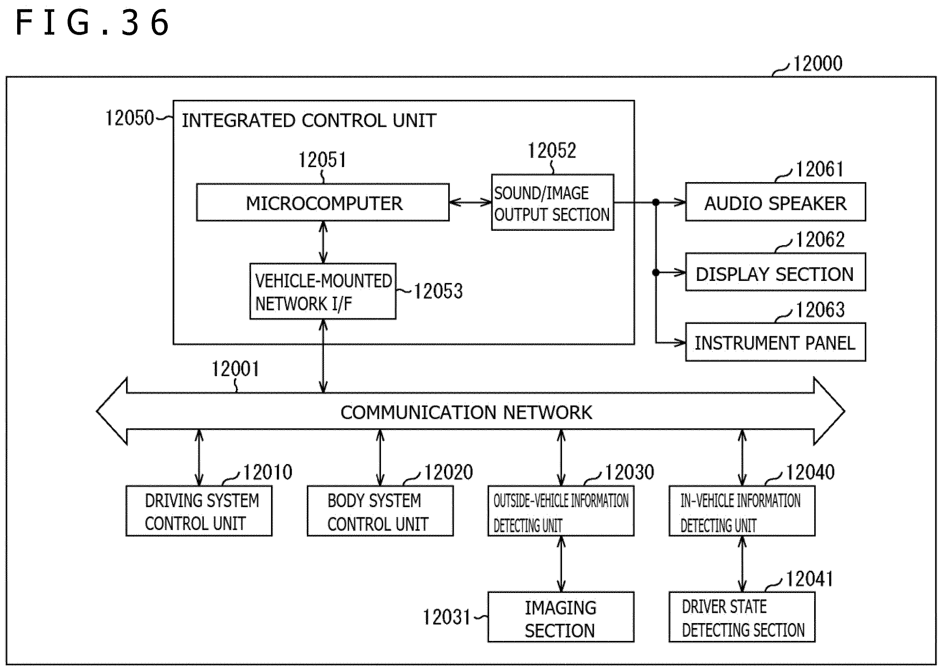

FIG. 36 is a block diagram depicting an example of schematic configuration of a vehicle control system.
[FIG. 37]

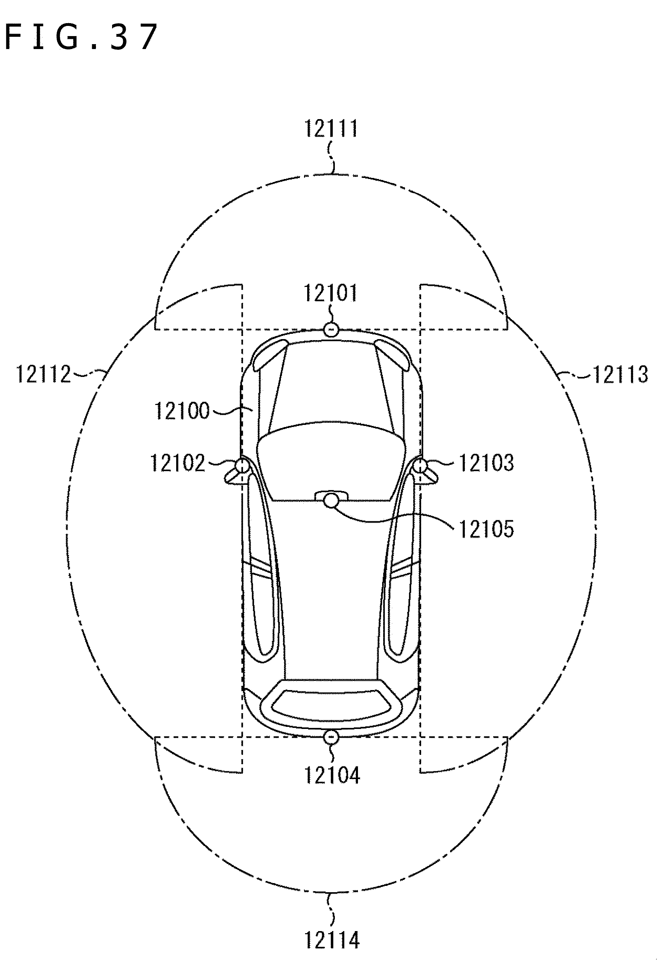

FIG. 37 is a diagram of assistance in explaining an example of installation positions of an outside-vehicle information detecting section and an imaging section.

[Description of Embodiments]

Modes for carrying out the present technology (hereinafter, referred to as embodiments) are described below.

<Configuration of Imaging Apparatus>

The present technology can be applied to an imaging apparatus. Therefore, in the following, a description is given by taking as an example the case in which the present technology is applied to an imaging apparatus.

FIG. 1 is a view depicting a configuration of an embodiment of the imaging apparatus to which the present technology is applied. An imaging apparatus 10a depicted in FIG. 1 includes a sensor 11a-1, a sensor 11a-2, a sensor 11a-3, a control section 12a, and a signal line 13a.

As the sensors 11a-1 to 11a-3, imaging elements such as CCD (Charge Coupled Device) or CMOS (Complementary Metal-Oxide Semiconductor) sensors can be employed. The imaging apparatus 10a can be mounted in, for example, a smartphone. In the following description, in the case in which there is no need to distinguish the sensors 11a-1 to 11a-3 from one another, they are described simply as the sensors 11a. The other sections are also described in a similar manner.

Here, because a description is given by taking the imaging apparatus 10 as an example, the description is continued by taking as an example the case in which the sensors 11 are image pickup elements (image sensors) such as CCD or CMOS sensors. However, even when the sensors 11 are sensors other than the image pickup elements, the present technology can be applied thereto. For example, the sensors 11 may be sensors such as ToF (Time-of-Flight) sensors or LiDAR (Light Detection and Ranging, Laser Imaging Detection and Ranging) sensors.

The sensor 11a-1 can be used as a wide sensor, the sensor 11a-2 can be used as a main sensor, and the sensor 11a-3 can be used as a tele sensor. The wide sensor is a sensor which performs imaging of an image on a wide end side and performs imaging of an image of a comparatively wide range. The tele sensor is a sensor which performs imaging of an image on a tele end side and performs imaging of an image of a comparatively small range. The main sensor performs imaging of an image of a range between the wide end and the tele end.

It is to be noted that the present technology can be applied also to the case in which the plurality of sensors 11a perform imaging with the same focal length, although here a description is given by taking as an example the case in which the sensors 11a with focal lengths different from each other, i.e., the wide-end, main, and teleend sensors, are provided. For example, the present technology can be applied also to the case in which a stereoscopic image is acquired by imaging by use of the plurality of sensors 11a, or the like. For example, the present technology can be applied also to the case of acquiring a ranging image.

For example, the control section 12a processes a signal from the sensor 11a by performing a predetermined application, and outputs the signal to a subsequent-stage processing section which is not depicted, or controls the sensor 11a. As the control section 12a, an ISP (Image Signal Processor) can be employed.

The example depicted in FIG. 1 (defined as a configuration example 1) is a configuration in which each of the sensors 11a-1 to 11a-3 operates as a master, and is a configuration generally called a stand-alone configuration or the like. In FIG. 1, the masters are depicted with oblique lines.

The sensors 11a and the control section 12a are connected by the signal line 13a which performs communication by, for example, an I2C (Inter-Integrated Circuit) system. The configuration example 1 depicted in FIG. 1 is a configuration in which each sensor 11a receives a control command from the control section 12a. In this configuration, a synchronization signal and the like are also generated by each sensor 11a.

It is also possible for the imaging apparatus 10 to have a configuration of configuration examples 2 to 4 depicted in FIG. 2 to 4.

FIG. 2 is a view depicting a configuration example of an imaging apparatus 10b in the configuration example 2. In the configuration example 2 depicted in FIG. 2, a sensor 11b-2 depicted with oblique lines is a master, and a sensor 11b-1 and a sensor 11b-3 are set as slaves.

In the case of the configuration in which one sensor 11b among the sensors 11b-1 to 11b-3 is set as the master and the other sensors 11b are set as the slaves, a synchronization signal generated by the sensor 11b-2 as the master is supplied to the sensor 11b-1 and the sensor 11b-3 as the slaves. A signal line 14b which supplies the synchronization signal is disposed among the sensors 11b.

FIG. 3 is a view depicting a configuration example of an imaging apparatus 10c in the configuration example 3. In the configuration example 3 depicted in FIG. 3, each of sensors 11c-1 to 11c-3 has a function of making a switch between master and slave and operates as the master or the slave. In the case in which one of the sensors 11c-1 to 11c-3 is operating as the master, the other sensors 11c operate as the slaves.

A synchronization signal generated by the sensor 11c which operates as the master is supplied to the sensors 11c as the slaves through a signal line 14c. A command from a control section 12c is supplied to the sensors 11c through a signal line 13c.

FIG. 4 is a view depicting a configuration example of an imaging apparatus 10d in the configuration example 4. In the configuration example 4 depicted in FIG. 4, sensors 11d-1 to 11d-3 operate as slaves, and a control section 12d operates as a master.

Because operating as the master, the control section 12d is configured to generate a synchronization signal and supply the synchronization signal to each sensor 11d through a signal line 14d. A command from the control section 12d is supplied to the sensors 11d through a signal line 13d.

The description will be continued on the premise that the imaging apparatus 10 has the three sensors 11, i.e., the sensors 11-1 to 11-3, including imaging elements. However, the present technology can be applied also to the case in which the imaging apparatus 10 includes two sensors 11 or three or more sensors 11.

The present technology to be described below can be applied to any configuration example among the configuration examples 1 to 4 depicted in FIGS. 1 to 4, as the configuration of the imaging apparatus 10. In the following description, the sensor 11 which operates as a master is described as a sensor 11M, and the sensor 11 which operates as a slave is described as a sensor 11S.

<Configuration of Sensor>

FIGS. 5 and 6 are views depicting configuration examples of the sensors 11.

FIG. 5 is a view depicting a configuration example of the sensor 11M which operates as a master. The sensor 11M includes an imaging section 51, a signal processing section 52, a synchronization signal generating and outputting section 53, and a control section 54.

The imaging section 51 includes an imaging element and lenses and receives reflected light from a subject to output a signal according to the amount of received light to the signal processing section 52. The signal processing section 52 performs processing such as defect correction, noise reduction, or high dynamic range imaging (HDR) on an input signal and outputs the resulting signal to the control section 12 (FIG. 1). It is to be noted that the function of processing the signal output from the imaging section 51 may be shared by the signal processing section 52 and the control section 12 (FIG. 1), or only either one of them may be allowed to have the function.

The synchronization signal generating and outputting section 53 generates a synchronization signal and a signal MoE which will be described later and is treated as a signal corresponding to the synchronization signal, and supplies the signals to the signal processing section 52. The synchronization signal generated by the synchronization signal generating and outputting section 53 is used for internal control and is supplied also to the sensor 11S on the slave side. The synchronization signal used for the internal control is, for example, a vertical synchronization signal, and the above-described signal MoE is a signal indicating a timing at which imaging has reached the center of exposure as described in detail later.

The control section 54 controls the respective sections in the sensor 11S in a mode set on the basis of a signal from an external, for example, a control signal from the control section 12b (FIG. 2).

FIG. 6 is a view depicting a configuration example of the sensor 11S which operates as a slave. The sensor 11S includes an imaging section 71, a signal processing section 72, a synchronization signal receiving section 73, and a control section 74.

The imaging section 71, the signal processing section 72, and the control section 74 of the sensor 11S which operates in a slave mode have a configuration and perform processing basically similar to those of the imaging section 51, the signal processing section 52, and the control section 54 of the sensor 11M which operates in a master mode. The synchronization signal receiving section 73 receives the synchronization signal (signal MoE) from the sensor 11M on the master side. The signal processing section 72 performs processing based on the synchronization signal received by the synchronization signal receiving section 73, for example, generates a vertical synchronization signal and performs processing based on the vertical synchronization signal.

<Synchronization of Control of Center of Exposure>

Synchronization of the center of exposure performed in the imaging apparatus 10 is described. In order to explain the synchronization of the center of exposure to which the present technology is applied, a description is given of a deviation which occurs in the center of exposure in the conventional technology, with reference to FIG. 7.

An upper diagram of FIG. 7 represents operation of a sensor 11M' which operates as a master (the conventional sensor 11M' is affixed with a prime symbol for discrimination from the sensor 11M to which the present technology is applied, and other elements are also similarly described). A lower diagram of FIG. 7 represents operation of a sensor 11S' which operates as a slave.

In the diagrams, I2C represents a command supplied from a control section 12' to the sensor 11' through a signal line 13'. MIPI (Mobile Industry Processor Interface) represents the output of an image (frame) obtained by imaging. In the diagrams, one frame is represented by a rectangle, and N or M described in the rectangle represents a frame number.

XVS (Output) represents a synchronization signal transmitted from the sensor 11M' on the master side to the sensor 11S' on the slave side through a signal line 14'. XVS (Input) represents a synchronization signal received by the sensor 11S' on the slave side. A synchronization signal internally generated with use of the received synchronization signal as a control command is represented by XVS (Internal).

At a clock time t1, the sensor 11M' generates a synchronization signal. This synchronization signal is supplied also to the sensor 11S' on the slave side. The sensor 11S' generates, at the clock time t1, a synchronization signal based on the synchronization signal received at the clock time t1. Depending on the specifications, it is possible to employ the setting in which the synchronization signal is generated two frames or three frames after the reception. Here, for simplification of explanation, it is assumed that the setting in which the synchronization signal is generated 0 frames after the reception is employed, and the description will be continued on the premise that synchronized processing is performed by generating the synchronization signal also on the side of the sensor 11S' at the timing at which the synchronization signal from the sensor 11M' is received.

At the clock time t1, readout of an (N - 1)-th frame (hereinafter, described as the frame (N - 1), and other frames are also similarly described) is started on the side of the sensor 11M', and readout of an (M - 1)-th frame is started on the side of the sensor 11S'.

At a clock time t2, exposure is started on the side of the sensor 11M'. At a clock time t3, exposure is started in the sensor 11S'.

At a clock time t6, as with the clock time t1, the sensor 11M' generates a synchronization signal, and the sensor 11S' receives the synchronization signal to generate an internal synchronization signal. Further, at the clock time t6, readout of a frame N is started on the side of the sensor 11M', and readout of a frame M is started on the side of the sensor 11S'.

A clock time t4 corresponds to the center of exposure in the sensor 11M'. A clock time t5 corresponds to the center of exposure in the sensor 11S'. The center of exposure is the center of an exposure time in any line in the case in which pixels are disposed on "a" rows and "b" columns in a pixel array unit of the sensor 11 and lines are defined as line 1, line 2, ···, line "a" from an upper side in a vertical direction. For example, in the example depicted in FIG. 7, the center of the exposure time of line a/2, which is the center of an image, is regarded as the center of exposure.

In FIG. 7, CIT (Middle) is a graph of the exposure time in the line regarded as the center of exposure. CIT is an abbreviation of Coarse Integration Time. CIT is a value indicating the exposure time with coarse granularity, and a detailed value is separately calculated. However, here, the description is continued while CIT is read as what is equivalent to the exposure time.

With reference to the graph of CIT (Middle) of the sensor 11M', a time from a clock time T1 to a clock time T2 is the exposure time of the line located at the center of the pixel array unit, and the center of the time from the clock time T1 to the clock time T2 corresponds to the clock time t4 and is treated as the center of exposure of the sensor 11M' (described as the center of exposure t4).

With reference to the graph of CIT (Middle) of the sensor 11S', a time from a clock time T3 to a clock time T4 is the exposure time of the line located at the center of the pixel array unit, and the center of the time from the clock time T3 to the clock time T4 corresponds to the clock time t5 and is treated as the center of exposure of the sensor 11M' (described as the center of exposure t5).

The center of exposure t4 of the sensor 11M' and the center of exposure t5 of the sensor 11S' are at different clock times. In the case in which the centers of exposure are different, for example, when one image is generated by synthesizing an image picked up by the sensor 11M' and an image picked up by the sensor 11S', there is a possibility that a blur occurs in a subject in the image arising from the synthesis and the image quality lowers. A description is given of this point with reference to FIG. 8.

An upper diagram of FIG. 8 is a diagram obtained by integrating diagrams from the clock time t2 to the clock time t6 regarding the sensor 11M' and the sensor 11S' depicted in FIG. 7. As described above, the time from the clock time t2 to the clock time t6 is the exposure time of the sensor 11M', and the clock time t4 is the center of exposure of the sensor 11M'. The time from the clock time t3 to the clock time t6 is the exposure time of the sensor 11S', and the clock time t5 is the center of exposure of the sensor 11S'.

A lower diagram of FIG. 8 is a view depicting an example of images picked up by the respective sensors 11M' and 11S' and an image obtained by synthesizing these images. The sensor 11M' and the sensor 11S' pick up an image M' and an image S', respectively, in which a subject is located at the center. There is a possibility that the image (M + S)' arising from the synthesis of these image M' and image S' is an image in which the subject is blurred.

In the case in which the centers of exposure are different, when a subject with motion is picked up, for example, there is a possibility that the position of the subject in the image M' is different from the position of the subject in the image S' and the image (M + S)' obtained by synthesizing such images is an image in which the subject is blurred.

With reference to FIG. 9, a description is given of control for allowing imaging in which the centers of exposure are matched with each other in order to prevent the lowering of the image quality due to the deviation in the center of exposure.

<Synchronization of Control of Center of Exposure to Which Present Technology Is Applied>

FIG. 9 is a view for explaining control (synchronization) of the center of exposure to which the present technology is applied. Parts same as those in FIG. 7 are given the same indications, and description thereof is omitted as appropriate.

At a clock time t11, the sensor 11M and the sensor 11S each generate a synchronization signal. Readout of a frame (N - 1) is started on the side of the sensor 11M, and readout of a frame (M - 1) is started on the side of the sensor 11S.

At a clock time t12, exposure is started on the side of the sensor 11M. At a clock time t13, exposure is started in the sensor 11S.

At a clock time t14, the sensor 11M generates information indicating that imaging is at the center of exposure, and supplies the information to the side of the sensor 11S. The sensor 11M obtains the center of exposure in the exposure time which has been set at the timing, by a computation formula to be described later, and generates a signal indicating that imaging is at the center of exposure and outputs the signal to the sensor 11S at the timing at which the center of exposure has been reached, in this case, at the timing at which the clock time has become the clock time t14.

The signal indicating that imaging is at the center of exposure is defined as the signal MoE. MoE is an abbreviation of Middle of Exposure. At the clock time t14, the sensor 11S receives the signal MoE. When this signal MoE is received, imaging is at the center of exposure also on the side of the sensor 11S. That is, the centers of exposure synchronize between the sensor 11M and the sensor 11S.

The sensor 11S generates an XVS signal at a clock time obtained by adding a time obtained by a computation formula to be described later to the center of exposure. In the example depicted in FIG. 9, the sensor 11S employs the clock time t14, at which the signal MoE is received, as the basis, and generates the synchronization signal XVS at a clock time t20 obtained by adding the time obtained by the computation formula to be described later to the clock time at which the next center of exposure is to be reached (clock time t19).

The time obtained by the computation formula to be described later may be added to the clock time t14, and the synchronization signal XVS may be generated at the resulting clock time (in FIG. 9, clock time t15). In the present embodiment, the signal MoE has a function corresponding to that of the conventional synchronization signal. The synchronization signal XVS is generated on the basis of the timing at which the signal MoE is received. The synchronization signal XVS is a signal indicating the timing at which readout of a frame is started.

In the sensor 11S, readout of a frame M is started at the clock time t15.

At a clock time t16, the sensor 11M generates a synchronization signal XVS. As described with reference to FIG. 7, the conventional sensor 11M' supplies the generated synchronization signal to the sensor 11S'. In contrast, the sensor 11M in the present embodiment does not supply the generated synchronization signal to the sensor 11S. The sensor 11M is configured to generate, instead of the synchronization signal, a signal MoE indicating the timing at which imaging has reached the center of exposure, and supply the signal MoE to the sensor 11S.

The sensor 11M starts readout of a frame N at the clock time t16.

At a clock time t17, exposure is started in the sensor 11M. At a clock time t18, exposure is started in the sensor 11S.

At the clock time t19, the sensor 11M generates a signal MoE indicating that imaging is at the center of exposure, and supplies the signal MoE to the side of the sensor 11S. When the sensor 11S receives the signal MoE, imaging is at the center of exposure also in the sensor 11S. The sensor 11S generates a synchronization signal XVS at the clock time obtained by adding the time obtained by a computation formula to be described later to the center of exposure. On the side of the sensor 11S, readout of a frame (M + 1) is started at the clock time t15.

At a clock time t21, the sensor 11M generates a synchronization signal XVS and starts readout of a frame (N + 1).

In this manner, the control to align the centers of exposure between the sensor 11M and the sensor 11S is performed. Due to this, for example, when one image is generated by synthesizing an image picked up by the sensor 11M and an image picked up by the sensor 11S, it is possible to prevent the occurrence of a blur in a subject in the image arising from the synthesis, and it is possible to prevent the lowering of the image quality or the like. A description is given of this point with reference to FIG. 10.

An upper diagram of FIG. 10 is a diagram obtained by integrating diagrams from the clock time t17 to the clock time t21 regarding the sensor 11M and the sensor 11S depicted in FIG. 9. As described above, the time from the clock time t17 to the clock time t21 is the exposure time of the sensor 11M, and the clock time t19 is the center of exposure of the sensor 11M. The time from the clock time t18 to the clock time t20 is the exposure time of the sensor 11S, and the clock time t19 is the center of exposure of the sensor 11S.

A lower diagram of FIG. 10 is a view depicting an example of images picked up by the respective sensors 11M and 11S and an image obtained by synthesizing these images. The sensor 11M and the sensor 11S pick up an image M and an image S, respectively, in which a subject is located at the center. These image M and image S are images in which the centers of exposure are matched with each other. Thus, an image (M + S) obtained by synthesizing the image M and the image S is an image in which the blur of the subject is suppressed.

Aligning the centers of exposure at the same clock time makes it possible to cause the position of the subject in the image M and the position of the subject in the image S to be substantially the same, for example, even when the subject with motion is picked up. In addition, the image (M + S) obtained by synthesizing such images can also be made as an image in which the subject is not blurred.

<Computation Relating to Control of Center of Exposure>

A reference is made again to FIGS. 7 and 8 employed as the example of the case in which the centers of exposure are different. A center-of-exposure difference ΔMoE[S] which is the difference between the clock time of the center of exposure of the sensor 11M' and the clock time of the center of exposure of the sensor S' is represented by the following formula (1).

$$\Delta MoE[S] = (CIT(M)/2 - height(M)/2) \times 1H - (CIT(S)/2 - height(S)/2) \times 1H \tag{1}$$

In formula (1), CIT(M) is the exposure time of the sensor 11M', and height(M) is the time taken to perform imaging for the number of lines (the number of rows) of the sensor 11M'. CIT(S) is the exposure time of the sensor 11S', and height(S) is the time taken to perform imaging for the number of lines (the number of rows) of the sensor 11S'. The timing of the center of exposure is calculated by CIT(M)/2 and CIT(S)/2. The timing of picking up the line at the center of the image is calculated by height(M)/2 and height(S)/2 (time from the start of imaging to imaging of the line at the center of the image).

It is to be noted that formula (1) and formulas depicted in the following description are one example and are not description indicating limitation. In more specific computation, the computation is performed by a computation formula defined also in consideration of characteristics of the sensor, constraints determined depending on the characteristics, and the like.

In the case in which the synchronization signal at the start of readout of a predetermined frame, for example, the synchronization signal generated at the clock time t6, is employed as the basis, in the sensor 11M', the clock time t4 earlier than the clock time t6 by (CIT(M)/2 - height(M)/2) is calculated as the clock time of the center of exposure. Similarly, in the sensor 11S', the clock time t5 earlier than the clock time t6 by (CIT(S)/2 - height(S)/2) is calculated as the clock time of the center of exposure.

In the sensor 11M', (CIT(M)/2 - height(M)/2) corresponds to the time from the synchronization signal as the basis to the center of exposure. Similarly, in the sensor 11S', (CIT(S)/2 - height(S)/2) corresponds to the time from the synchronization signal as the basis to the center of exposure.

This (CIT(S)/2 - height(S)/2) on the side of the sensor 11S' is the difference between the synchronization signal as the basis and the center of exposure in the conventional case depicted in FIG. 7. Conventionally, as the synchronization signal as the basis, the synchronization signal of the same clock time is employed in the sensor 11M' and the sensor 11S'. Here, it can be said that (CIT(S)/2 - height(S)/2) is the time which is the difference between the clock time at which the sensor 11M' generates the synchronization signal and the clock time at which imaging is at the center of exposure in the sensor 11S'.

The difference in the center of exposure is the difference between the clock time t4 and the clock time t5 and can thus be represented as depicted by formula (1).

A reference is made again to FIGS. 9 and 10 employed as the example in which the centers of exposure are matched with each other. Also in the case described with reference to FIGS. 9 and 10, if the processing to match the centers of exposure with each other is not performed, the difference in the center of exposure by ΔMoE[S] is generated as with the case described with reference to FIGS. 7 and 8. To eliminate this difference in the center of exposure, on the side of the sensor 11S, processing for shifting the center of exposure to cause the center of exposure to correspond with the center of exposure on the side of the sensor 11M is performed.

The sensor 11S receives, from the sensor 11M, the signal MoE output when imaging is at the center of exposure in the sensor 11M. In order to output this signal MoE, the sensor 11M calculates the clock time obtained by subtracting (CIT(M)/2 - height(M)/2) from the clock time at which the synchronization signal as the basis is generated. The sensor 11M generates the signal MoE at the calculated clock time and outputs the signal MoE to the sensor 11S.

For example, in the case in which generation of the synchronization signal XVS as the basis at the clock time t15 is set, (CIT(M)/2 - height(M)/2) is subtracted from the clock time t15 to obtain the clock time t14. This clock time t14 is set as the clock time at which the center of exposure is reached on the side of the sensor 11M.

The sensor 11S sets the clock time of the next center of exposure from the clock time at which the signal MoE is received, and makes the setting to generate the synchronization signal XVS at the clock time obtained by adding (CIT(S)/2 - height(S)/2) to the clock time of the next center of exposure.

As described with reference to FIG. 7, in the conventional case, when the synchronization signal of the sensor 11M' (the synchronization signal generated by the sensor S') is employed as the basis, (CIT(S)/2 - height(S)/2) of the sensor 11S' is the difference between the synchronization signal and the center of exposure of the sensor 11S'. When this point is considered on the basis of the center of exposure, the case described with reference to FIG. 9 is given, and (CIT(S)/2 - height(S)/2) of the sensor 11S becomes the difference between the center of exposure of the sensor 11M (the clock time at which the sensor 11S receives the signal MoE) and the synchronization signal XVS generated by the sensor 11S.

Due to such a situation, as described above, the sensor 11S sets the clock time of the next center of exposure from the clock time at which the signal MoE is received, and makes the setting to generate the synchronization signal XVS at the clock time obtained by adding (CIT(S)/2 - height(S)/2) to the clock time of the next center of exposure.

For example, in the case in which the signal MoE is received at the clock time t14, the clock time at which the next center of exposure is to be reached is estimated on the basis of the clock time t14. In the example depicted in FIG. 9, the clock time at which the center of exposure is to be reached is the clock time t19. The clock time t19 obtained by adding (CIT(S)/2 - height(S)/2) to this clock time t19 is obtained, and the synchronization signal XVS is generated at the clock time t19.

The sensor 11S adjusts the next image pickup timing by computation by using the signal MoE representing the timing of the center of exposure of the sensor 11M as the synchronization signal. This implements image pickup in which the centers of exposure are aligned between the sensor 11M and the sensor 11S.

Performing the control to match the center of exposure with the center of exposure of the sensor 11M by the sensor 11S includes controlling and adjusting the timing of the synchronization signal XVS internally generated in the sensor 11S.

Here, the description is given by taking as the example the case in which the centers of exposure are aligned between two sensors 11, the sensor 11M and the sensor 11S. However, the number of sensors 11S on the slave side is not limited to one, and a plurality of sensors 11S may exist. Even in the case in which a plurality of sensors 11S exist, imaging in which the centers of exposure are aligned between the plurality of sensors 11S and the sensor 11M can be performed through execution by each sensor 11S of the above-described processing performed by the sensor 11S.

In the adjustment of the synchronization signal XVS of the sensor 11S, the feedback destination depends on the condition.

Condition 1 In the case of (CIT(S)/2 - height(S)/2) > 0
→ feedback to the synchronization signal XVS (FLL is a set value)
Condition 2 In the case of (CIT(S)/2 - height(S)/2) < 0
→ feedback to the FLL (synchronization signal XVS is a set value)
Condition 3 In the case of (CIT(S)/2 - height(S)/2) = 0
→ the synchronization signal XVS and the FLL are both a set value

In conditions 1 to 3, FLL is an abbreviation of Frame length lines and is a value which decides the timing from generation of a predetermined synchronization signal XVS to generation of the next synchronization signal XVS, that is, the frame length.

Condition 1 corresponds to the situation described with reference to FIG. 9. Under condition 1, in the case in which the value of (CIT(S)/2 - height(S)/2) calculated on the side of the sensor 11S is larger than 0, the sensor 11S adjusts the synchronization signal XVS by adjusting the waiting time until the sensor 11S receives the input of the signal MoE indicating the timing at which imaging has reached the center of exposure from the sensor 11M on the master side. In the case of condition 1, a set value is used as the FLL.

Condition 2 corresponds to a situation to be described later with reference to FIG. 11. Under condition 2, in the case in which the value of (CIT(S)/2 - height(S)/2) calculated on the side of the sensor 11S is smaller than 0, the sensor 11S adjusts the frame length by feeding back the value of (CIT(S)/2 - height(S)/2) to the FLL, specifically, adding (CIT(S)/2 - height(S)/2) to the FLL, and consequently adjusts the synchronization signal XVS. In the case of condition 2, a set value is used as the synchronization signal XVS itself.

Under condition 3, in the case in which the value of (CIT(S)/2 - height(S)/2) calculated on the side of the sensor 11S is 0, a set value is used as both the synchronization signal and the FLL in the sensor 11S.

A maximum value which does not exceed the frame length of the sensor 11M as the master is set as the FLL of the sensor 11S on the slave side in order to establish synchronization of the synchronization signal XVS.

With reference to FIG. 11, a description is additionally given of the case in which the synchronization signal XVS is adjusted under condition 2.

At a clock time t31, the sensor 11S generates a synchronization signal. Readout of a frame (M - 1) is started on the side of the sensor 11S.

At a clock time t32, exposure is started on the side of the sensor 11M. At a clock time t33, exposure is started in the sensor 11S.

At a clock time t34, the sensor 11M generates a synchronization signal XVS and starts readout of a frame N, and the sensor 11S also generates a synchronization signal XVS and starts readout of a frame M.

At a clock time t35, the sensor 11M generates information (signal MoE) indicating that imaging is at the center of exposure, and supplies the information to the side of the sensor 11S. The sensor 11S receives the signal MoE from the sensor 11M at the clock time t35. Control to match the centers of exposure with each other is performed also on the side of the sensor 11S. Thus, at the clock time t35, the center of exposure is reached also on the side of the sensor 11S.

In the example depicted in FIG. 11, the exposure time is short, and thus the value of (CIT(S)/2 - height(S)/2) of the sensor 11S is equal to or smaller than 0. Therefore, condition 2 is applied, and feedback is given to the FLL. Through the adjustment of the FLL, adjustment of the synchronization signal XVS for causing the center of exposure to correspond with the center of exposure on the side of the sensor 11M is performed. Specifically, the FLL is adjusted by the following formula (2).

The FLL of the sensor 11S = the center of exposure + (CIT(S)/2 - height(S)/2)     (2)

In formula (2), (CIT(S)/2 - height(S)/2) is a value smaller than 0, that is, a negative value. Hence, the synchronization signal XVS internally generated in the sensor 11S is generated at a clock time earlier by (CIT(S)/2 - height(S)/2) than the clock time at which the signal MoE indicating the timing at which imaging has reached the center of exposure is received. For example, with reference to the example depicted in FIG. 11, the sensor 11S receives the signal MoE at a clock time t37 and generates the synchronization signal XVS at a clock time t36 which is the timing earlier than the clock time t37 by (CIT(S)/2 - height(S)/2).

As above, in the case in which the value calculated on the basis of (CIT(S)/2 - height(S)/2) is smaller than 0, the control to cause the centers of exposure of the sensor 11M and the sensor 11S to correspond with each other is performed through the adjustment of the FLL.

A configuration is made such that which of conditions 1, 2, and 3 the adjustment is performed under can be changed during image pickup operation.

<Operation of Sensor 11M>

With reference to a flowchart of FIG. 12, a description is given of the processing for matching the centers of exposure with each other, the processing being performed by the sensor 11M on the master side.

In a step S11, the sensor 11M obtains the center of exposure. As described with reference to FIG. 8, the sensor 11M calculates the timing (clock time) at which the center of exposure is to be reached, by subtracting (CIT(M)/2 - height(M)/2) from the clock time at which the synchronization signal XVS is generated.

In a step S12, the sensor 11M generates a signal Moe indicating that imaging is at the center of exposure and transmits the signal Moe to the sensor 11S at the timing at which the center of exposure has been reached, in other words, at the calculated clock time.

In this manner, the sensor 11M on the master side generates the information (signal MoE) regarding the center of exposure of the sensor 11M and supplies the information to the sensor 11S on the slave side.

<Operation of Sensor 11S>

With reference to a flowchart of FIG. 13, a description is given of the processing for matching the centers of exposure with each other, the processing being performed by the sensor 11S on the slave side.

In a step S31, the sensor 11S receives the signal MoE. In a step S32, the sensor 11S calculates (CIT(S)/2 - height(S)/2) and determines whether or not the value thereof is larger than 0. In the case in which it is determined in the step S31 that (CIT(S)/2 - height(S)/2) > 0 is satisfied, the processing is advanced to a step S33.

In the step S33, control is performed such that the position of the center of exposure is adjusted through adjustment of the synchronization signal XVS and the center of exposure is to be reached at a timing same as that of the sensor 11M. In the step S33, the generation timing of the synchronization signal XVS is set by addition of (CIT(S)/2 - height(S)/2) to the clock time at which the next center of exposure is to be reached.

On the other hand, in the case in which it is determined in the step S32 that (CIT(S)/2 - height(S)/2) > 0 is not satisfied, the processing is advanced to a step S34. In the step S34, whether or not (CIT(S)/2 - height(S)/2) is smaller than 0 is determined. In the case in which it is determined in the step S34 that (CIT(S)/2 - height(S)/2) < 0 is satisfied, the processing is advanced to a step S35.

In the step S35, control is performed such that the position of the center of exposure is adjusted through adjustment of the FLL and the center of exposure is to be reached at a timing same as that of the sensor 11M. In the step S35, by addition of (CIT(S)/2 - height(S)/2) to the clock time at which the next center of exposure is to be reached, the FLL is adjusted, and the generation timing of the synchronization signal XVS is set.

On the other hand, in the case in which it is determined in the step S34 that (CIT(S)/2 - height(S)/2) < 0 is not satisfied, the processing is advanced to a step S36. It is when (CIT(S)/2 - height(S)/2) = 0 is satisfied that the processing proceeds to the step S36. In the step S36, set values are used as the XVS and the FLL. In other words, the XVS and the FLL set at that timing are used, and adjustment of the XVS and the FLL is not performed.

In this manner, the sensor 11S on the slave side adjusts the XVS or the FLL to cause the center of exposure of the sensor 11S to correspond with the center of exposure of the sensor 11M on the master side.

<Change in Exposure Time during Imaging Operation>

The case in which the exposure time is changed during imaging operation is described. FIG. 14 is a view representing AE (automatic exposure function (Auto Exposure)) control performed in the imaging apparatus 10 and the center of exposure. An upper diagram of FIG. 14 represents operation of the sensor 11M. A lower diagram of FIG. 14 represents operation of the sensor 11S.

In the diagrams, one frame is represented by a rectangle. AE1 and AE2 indicated in the rectangles represent exposure conditions such as the exposure time and gain. AE1 and AE2 represent that the exposure conditions are different.

At a clock time t51, the sensor 11M generates a signal MoE indicating the timing at which imaging has reached the center of exposure, and supplies the signal MoE to the sensor 11S on the slave side. At the clock time t51, the sensors 11M and 11S are in the state in which the centers of exposure correspond with each other because the above-described processing is performed.

At a clock time t52, the sensor 11M generates a signal MoE indicating the timing at which imaging has reached the center of exposure, and supplies the signal MoE to the sensor 11S on the slave side. In the example depicted in FIG. 14, at the clock time t52, the sensor 11M and the sensor 11S receive a command from the control section 12 (not depicted in FIG. 14). It is to be noted that the command is transmitted from the control section 12 to each of the sensor 11M and the sensor 11S and, to be exact, the sensor 11M receives the command at the clock time t52, and the sensor 11S receives the command after the elapse of some time from the clock time t52.

Here, it is assumed that the command received by the sensor 11M and the sensor 11S at the clock time t52 is a command relating to the AE control and is a command to change AE1 to AE2.

At a clock time t53, the sensor 11M generates a signal MoE indicating the timing at which imaging has reached the center of exposure, and supplies the signal MoE to the sensor 11S on the slave side. At a clock time t54, the sensor 11M generates a signal MoE indicating the timing at which imaging has reached the center of exposure, and supplies the signal MoE to the sensor 11S on the slave side. At the timing of the clock time t54, the side of the sensor 11M has started processing based on the command received at the clock time t52. That is, the sensor 11M changes the exposure conditions to AE2 and performs imaging on the basis of parameters set under the exposure conditions AE2.

On the other hand, at the timing of the clock time t54, the sensor 11S is performing control in which the signal MoE received at the clock time t53 is employed as a synchronization signal, and hence, the center of exposure has not been changed. Therefore, the center of exposure is reached at the timing of a clock time t55. There is a possibility that the clock time t54 and the clock time t55 involve a deviation and do not correspond with each other, and there is a possibility that the centers of exposure do not correspond with each other.

As above, when the exposure time is changed, the center of exposure is also changed. Hence, there is a possibility that the synchronization which causes the centers of exposure to correspond with each other is lost and the frame rate varies at one frame immediately after the change in the exposure time. However, the state in which synchronization of the center of exposure is established is obtained two frames after the change in the exposure time. In the example depicted in FIG. 14, at a clock time t56, the state in which synchronization of the center of exposure is established between the sensor 11M on the master side and the sensor 11S on the slave side has been made.

A description is given of the deviation in the synchronization of the center of exposure with further reference to FIGS. 15 to 18.

FIG. 15 is a view for explaining a deviation and a return of synchronization in the case in which a driving mode of the sensor 11M on the master side is dynamically changed. At a clock time t71, imaging is at the center of exposure in the sensor 11M and the sensor 11S, and the sensors 11M and 11S are in the state in which synchronization of the center of exposure is established. It is to be noted that, in the views such as FIG. 15, for convenience of explanation, lines are depicted with a slight gap therebetween in some cases even when synchronization is established, such that the lines may be kept from overlapping each other.

At a clock time t72, the sensor 11M receives a control command and starts control based on the control command. In the case in which this control command is a command including an instruction to immediately change the mode, control for a transition to the mode is started immediately after the reception.

On the side of the sensor 11S, the center of exposure is reached at a clock time t73. This center of exposure is the center of exposure set at the timing of the clock time t71. There is a possibility that the center of exposure at the clock time t73 deviates from the center of exposure on the side of the sensor 11M in which the control for the mode change has been performed. In the example depicted in FIG. 16, the center of exposure is reached in the sensor 11M at a clock time t74. Thus, the center of exposure is reached at a timing later than the clock time t73.

At the clock time t74, the sensor 11M, in which the center of exposure is reached, generates a signal MoE and supplies the signal MoE to the sensor 11S. The sensor 11S receives the signal MoE at the clock time t74, computation for matching with the center of exposure on the side of the sensor 11M is performed from this signal MoE, and a synchronization signal XVS based on the computation is generated. The synchronization signal XVS to be generated is generated at a clock time t75 in FIG. 16.

From the clock time t75, a return is made to the state in which the centers of exposure synchronize between the sensor 11M and the sensor 11S. At a clock time t76, the center of exposure is reached in both the sensor 11M and the sensor 11S, and the state in which the synchronization of the center of exposure is established is made.

As above, in the case in which the sensor 11M receives the control command for the mode change or the like and performs processing of the mode change, although there is a possibility that the synchronization of the center of exposure is lost at one frame immediately after the change, the synchronization of the center of exposure can be restored at the second frame.

FIG. 16 is a view for explaining a deviation and a return of synchronization in the case in which a driving mode of the sensor 11S on the master side is dynamically changed. At a clock time t81, imaging is at the center of exposure in the sensor 11M and the sensor 11S, and the sensors 11M and 11S are in the state in which synchronization of the center of exposure is established.

At a clock time t82, the sensor 11S receives a control command and starts control based on the control command. In the case in which this control command is a command including an instruction to immediately change the mode, control for a transition to the mode is started immediately after the reception.

In this case, the side of the sensor 11S makes a change to control in which a synchronization signal XVS set to be generated at a clock time t84 by using a signal MoE received at the clock time t81 is not generated, on the basis of the control command received at the clock time t82 (even if the synchronization signal XVS is generated, control is so performed as to keep readout based on the synchronization signal XVS from being started).

At a clock time t83, the center of exposure is reached on the side of the sensor 11M. However, on the side of the sensor 11S, the state in which the center of exposure is absent is made because image pickup processing is not performed. At the clock time t83, the state in which the synchronization of the center of exposure is temporarily lost between the sensor 11M and the sensor 11S is made.

At the clock time t83, the sensor 11S receives a signal MOE indicating the timing at which imaging has reached the center of exposure, from the sensor 11M. Further, at the clock time t83, the sensor 11S has started the control based on the control command received at the clock time t82. The sensor 11S sets the next exposure time and the generation timing of a synchronization signal XVS on the basis of the signal MOE and the content of the instruction of the control command. In the example depicted in FIG. 17, this set clock time is a clock time t86, and the sensor 11S generates a synchronization signal XVS at the clock time t86.

At a clock time t85 which is a timing earlier than the clock time t86, the center of exposure is reached in the sensor 11M, and the sensor 11M generates a signal MoE and supplies the signal MoE to the sensor 11S. Also in the sensor 11S, the generation timing of the synchronization signal XVS in the mode after the change has been controlled at the timing of the clock time t83. Hence, the center of exposure is reached also on the side of the sensor 11S at the clock time t85.

As above, in the case in which the sensor 11S receives the control command for the mode change or the like and performs processing of the mode change, although there is a possibility that the synchronization of the center of exposure is lost at one frame immediately after the change, the synchronization of the center of exposure can be restored at the second frame.

FIG. 17 is a view for explaining a deviation and a return of synchronization in the case in which the driving mode of the sensor 11M on the master side is dynamically changed.

At a clock time t101, the sensor 11M receives a control command and starts control based on the control command. In the case in which this control command is a command to change the mode while keeping the frame rate after the completion of a frame output after 1 V, the mode is changed after the output of a frame N output at a timing after the clock time t101.

At a clock time t102, imaging is at the center of exposure in the sensor 11M and the sensor 11S, and the sensors 11M and 11S are in the state in which synchronization of the center of exposure is established. At the clock time t102, the sensor 11M generates a signal MoE indicating the timing at which imaging has reached the center of exposure, and supplies the signal MoE to the sensor 11S. The sensor 11S performs computation for matching with the center of exposure on the side of the sensor 11M by using the received signal MoE, and generates a synchronization signal based on the computation. The synchronization signal to be generated is generated at a clock time t103 in FIG. 17.

On the side of the sensor 11S, the center of exposure is reached at a clock time t104. This center of exposure is the center of exposure set at the timing of the clock time t102. There is a possibility that the center of exposure at the clock time t104 deviates from the center of exposure on the side of the sensor 11M in which the control for the mode change has been performed. In the example depicted in FIG. 17, the center of exposure is reached in the sensor 11M at a clock time t105. Thus, the center of exposure is reached at a timing later than the clock time t104. On the side of the sensor 11M, the clock time t105 is a timing after the output of one frame after the clock time t101, and thus is a timing after the mode has been changed.

At the clock time t105, the sensor 11M, in which the center of exposure is reached, generates a signal MoE and supplies the signal MoE to the sensor 11S. The sensor 11S receives the signal MoE at the clock time t105, computation for matching with the center of exposure on the side of the sensor 11M is performed from this signal MoE, and a synchronization signal is generated at a timing based on the computation. The synchronization signal to be generated is generated at a clock time t106 in FIG. 17.

At a clock time t107, imaging is at the center of exposure in the sensor 11M and the sensor 11S, and the sensors 11M and 11S are in the state in which synchronization of the center of exposure is established. From the clock time t107, a return is made to the state in which the centers of exposure synchronize between the sensor 11M and the sensor 11S.

As above, in the case in which the sensor 11M receives the control command for the mode change or the like and performs processing of the mode change, although there is a possibility that the synchronization of the center of exposure is lost at one frame immediately after the change, the synchronization of the center of exposure can be restored at the second frame.

FIG. 18 is a view for explaining a deviation and a return of synchronization in the case in which the driving mode of the sensor 11S on the slave side is dynamically changed.

At a clock time t121, the sensor 11S receives a control command and starts control based on the control command. In the case in which this control command is a command to change the mode while keeping the frame rate after the completion of a frame output after 1 V, the mode is changed after the output of a frame (M - 1) output at a timing after the clock time t121.

At a clock time t122, imaging is at the center of exposure in the sensor 11M and the sensor 11S, and the sensors 11M and 11S are in the state in which synchronization of the center of exposure is established. At the clock time t122, the sensor 11M generates a signal MoE indicating the timing at which imaging has reached the center of exposure, and supplies the signal MoE to the sensor 11S. The sensor 11S performs computation for matching with the center of exposure on the side of the sensor 11M by using the received signal MoE, and generates a synchronization signal based on the computation. The synchronization signal to be generated is generated at a clock time t124 in FIG. 18.

In this case, the side of the sensor 11S performs control such that the synchronization signal XVS set to be generated at a clock time t123 by using the signal MoE received at the clock time t121 is generated at the clock time t124, on the basis of the control command received at the clock time t121.

In the example depicted in FIG. 18, at the clock time t124, the center of exposure is reached on the side of the sensor 11M. However, on the side of the sensor 11S, the state in which imaging is not at the center of exposure is made because the exposure time and the like have been changed on the basis of the control command.

At the clock time t124, the sensor 11S receives a signal MOE indicating the timing at which imaging has reached the center of exposure, from the sensor 11M. The sensor 11S sets the next exposure time and the generation timing of a synchronization signal XVS on the basis of the signal MOE. In the example depicted in FIG. 18, this set clock time is a clock time t126, and the sensor 11S generates a synchronization signal XVS at the clock time t126.

At a clock time t125 which is a timing earlier than the clock time t126, the center of exposure is reached in the sensor 11S. In the sensor 11M, the center of exposure is reached at the clock time t125. In the sensor 11S, the center of exposure is reached at the clock time t126. At the clock times t125 and t126, the state in which the synchronization of the center of exposure is temporarily lost between the sensor 11M and the sensor 11S is made.

At a clock time t127, the center of exposure is reached in the sensor 11M, and the sensor 11M generates a signal MoE and supplies the signal MoE to the sensor 11S. Also in the sensor 11S, the generation timing of the synchronization signal XVS in the mode after the change has been controlled at the timing of the clock time t124. Hence, the center of exposure is reached also on the side of the sensor 11S at the clock time t127.

As above, in the case in which the sensor 11S receives the control command for the mode change or the like and performs processing of the mode change, although there is a possibility that the synchronization of the center of exposure is lost at one frame immediately after the change, the synchronization of the center of exposure can be restored at the second frame.

<Reflection Timing of Parameters>

As described above, execution of processing for synchronizing the centers of exposure makes it possible to synchronize the centers of exposure. The centers of exposure can be aligned, whereas there is a possibility that reflection timings of parameters deviate from each other.

Conventionally, by establishing synchronization of the synchronization signal relating to readout of a frame, the reflection timings of parameters are aligned at a certain degree between the side of the sensor 11M and the side of the sensor 11S. In addition, a communication synchronization function exists as a function for aligning timings of communication completion, and it has also been possible to ensure simultaneous reflection by using such a function.

As described above, the synchronization signal on the side of the sensor 11S is adjusted as processing for synchronizing the centers of exposure. Hence, there is a possibility of occurrence of a situation in which it is impossible to align the reflection timings of parameters.

In order for the control section 12 to specify the frame at which the parameters are reflected, the control section 12 needs to control the communication timing. As described above, there is a possibility that the generation timing of the synchronization signal XVS is changed in the sensor 11S. Hence, the control section 12 needs to specify the frame at which the parameters are reflected, also in consideration of the possibility of such a change. Thus, the timing of notification of the frame at which the parameters are reflected needs to be controlled also in consideration of the generation timing of the synchronization signal of the sensor 11S, and the like. Accordingly, there is a possibility that the control itself becomes complicated and the communication timing deviates.

It is also possible to make a configuration to perform control to be described with reference to FIG. 19, in order to prevent such a problem. With reference to FIG. 19, at a clock time t151, the sensor 11M receives a control command from the control section 12. In this control command, information regarding from which frame the parameters are to be reflected is also included. In the example depicted in FIG. 19, an instruction to change the frame rate from a frame (N + 2) is included. In the case in which such an instruction is received, the sensor 11M performs processing of changing the frame rate from the frame (N + 2).

Meanwhile, the sensor 11S receives a control command from the control section 12 at a clock time t53. Included is the case in which the control section 12 intentionally performs control of transmitting the control commands to the sensor 11M and the sensor 11S at the clock time t151 and the clock time t153 separately. Also included is the case in which the control section 12 transmits the control commands to the sensor 11M and the sensor 11S at the same timing but the reception timing involves a deviation due to any cause.

The information regarding from which frame the parameters are to be reflected is included also in the control command received by the sensor 11S. In the example depicted in FIG. 19, an instruction to change the frame rate from a frame (M + 2) is included. In the case in which such an instruction is received, the sensor 11S performs processing of changing the frame rate from the frame (M + 2).

In this manner, the frame at which the parameters are desired to be reflected is included in the control command and is specified. This can align the timings (frames) of the reflection irrespective of the reception timings of the commands regarding the sensor 11M and the sensor 11S. Further, the side of the control section 12 is allowed to transmit the commands without caring about the timings of the transmission to the sensor 11M and the sensor 11S.

Such processing which can align the reflection timings of the parameters is performed. In addition, the processing of aligning the centers of exposure is also performed. Therefore, imaging in which the centers of exposure of the sensor 11M and the sensor 11S are aligned is performed. In the example depicted in FIG. 19, the centers of exposure of the sensor 11M and the sensor 11S are aligned at a clock time t152, a clock time t154, and a clock time t155.

At the clock time t155, the sensor 11M generates a signal MoE indicating the timing at which imaging has reached the center of exposure, and supplies the signal MoE to the sensor 11S. The sensor 11S performs computation for matching with the center of exposure on the side of the sensor 11M by using the received signal MoE, and generates a synchronization signal based on the computation. The synchronization signal to be generated is generated at a clock time t156 in FIG. 19.

At the clock time t155, the sensor 11M and the sensor 11S have each been changed to the mode based on the received control command. The sensor 11S makes the setting to generate the synchronization signal XVS at the clock time t156, on the basis of the mode after the change and the received signal MoE. Performing such processing makes the state in which the centers of exposure of the sensor 11M and the sensor 11S are aligned at a clock time t157.

As above, according to the present technology, the centers of exposure can be aligned between the sensor 11M and the sensor 11S, and the reflection timings of parameters can also be aligned.

<Processing in Case in Which Transition Is Made from Idle State to Activated State>

In the above-described embodiment, the description has been given of the processing in the state in which the sensor 11M and the sensor 11S are both activated. With reference to FIG. 20, a description is given of the case of making a transition from the state in which only one of the sensor 11M and the sensor 11S is activated and is performing imaging to the state in which the other is also activated to start imaging.

At a clock time t171, the sensor 11M receives a control command from the control section 12. In this control command, information regarding from which frame parameters are to be reflected is also included, as with the case described with reference to FIG. 19. In the example depicted in FIG. 20, an instruction to make a transition from a single imaging state to a multi-camera imaging state from a frame (N + 1) is included. In the case in which such an instruction is received, the sensor 11M performs processing of making a transition to multi-camera imaging in which imaging is performed with the sensor 11M and the sensor 11S, from the frame (N + 1).

During the single imaging state with the sensor 11M, the sensor 11S is in the idle state. In the example depicted in FIG. 20, the sensor 11S is in the idle state until a clock time t173.

At a clock time t172, the center of exposure is reached in the sensor 11M. However, because of the single imaging state, the processing of generating a signal MoE indicating the timing at which imaging has reached the center of exposure and supplying the signal MoE to another sensor 11 is omitted.

At the clock time t173, the center of exposure is reached in the sensor 11M. Thereupon, the processing of generating a signal MoE and supplying the signal MoE to another sensor 11 is performed. The clock time t173 is after the start of readout of (N + 1), and the multi-camera imaging state has been made on the basis of the instruction to make a transition to the multi-camera imaging state from the frame (N + 1) by the instruction of the control command. During the multi-camera imaging state, the sensor 11M performs the processing of generating and outputting a signal MoE.

At the clock time t173, the sensor 11S cancels the idle state and makes a transition to the imaging mode by receiving the signal MoE from the sensor 11M. The sensor 11S obtains the timing of generation of a synchronization signal XVS on the basis of the signal MoE from the sensor 11M and set parameters. In the example depicted in FIG. 20, the setting to generate the synchronization signal XVS at a clock time t174 is made.

The sensor 11S starts readout of a frame M from the clock time t174. That is, in this case, the sensor 11S is activated at the clock time t173 to start imaging, and starts the readout of the imaged frame M from a clock time t175 set at the clock time t174. Due to the start of such imaging processing on the side of the sensor 11S, the multi-camera imaging state by the sensor 11M and the sensor 11S is started.

At the clock time t175, a clock time t176, and a clock time t177 after the start of the multi-camera imaging state, imaging in the state in which the centers of exposure of the sensor 11M and the sensor 11S synchronize is performed.

As above, it is also possible to use the signal MoE indicating the timing at which imaging has reached the center of exposure, in order to activate the sensor 11 in the idle state. Moreover, by including the timing of the transition to the multi-camera imaging state in the control command, the multi-camera imaging state can be made from a desired timing (desired frame).

<Another Kind of Processing in Case in Which Transition Is Made from Idle State to Activated State>

With reference to FIGS. 21 and 22, a description is given of another kind of processing in the case in which the mode is switched from the idle state to the activated state.

In the state depicted in FIG. 21, the sensor 11M is in the activated state, and the sensor 11S is in the non-activated state (idle state). In the case in which, in such a state, the center of exposure is reached in the sensor 11M and the sensor 11M generates a signal MoE and outputs the signal MoE to the sensor 11S at a clock time t201, because being in the idle state, the sensor 11S does not perform processing for the received signal MoE (keeps the idle state) even when receiving the signal MoE.

At a clock time t202, the sensor 11S receives an activation (boot) command from the control section 12 and makes a transition from the idle state to the activated state.

At a clock time t203, the center of exposure is reached in the sensor 11M, and the sensor 11M generates a signal MoE and supplies the signal MoE to the sensor 11S. The sensor 11S receives the signal MoE at the clock time t203, computation for matching with the center of exposure on the side of the sensor 11M is performed from this signal MoE, and a synchronization signal based on the computation is generated. The synchronization signal to be generated is generated at a clock time t204 in FIG. 21.

At the clock time t204, the sensor 11S starts readout of a frame M. The sensor 11S is activated, and the frame M imaged first after the reception of the signal MoE from the sensor 11M is read out from the clock time t204.

At a clock time t205, the state in which imaging is at the center of exposure in both the sensor 11M and the sensor 11S is made. That is, the state in which synchronization of the center of exposure is established between the sensor 11M and the sensor 11S is made.

In this case, it is possible to allow establishment of the synchronization of the center of exposure from the first frame of the sensor 11S.

With reference to FIG. 22, a description is given of synchronization of the center of exposure in the case in which the sensor 11M on the master side is activated after the sensor 11S on the slave side is activated.

In the state depicted in FIG. 22, the sensor 11M and the sensor 11S are in the non-activated state (idle state). In such a state, at a clock time t221, the sensor 11S receives, from the control section 12, a command including an instruction to keep the idle state until a pre-shutter synchronization signal is received and make a transition to the activated state when the pre-shutter synchronization signal is received.

At a clock time t222, the sensor 11M receives a command which instructs activation, from the control section 12. After being activated, the sensor 11M generates a pre-shutter synchronization signal at a clock time t223 and supplies the pre-shutter synchronization signal to the sensor 11S. The pre-shutter synchronization signal is a signal which gives an instruction to start imaging. In this pre-shutter synchronization signal, adjustment of a time corresponding to the difference in the center of exposure is also included.

In the example described in FIG. 22, the pre-shutter synchronization signal is generated at a clock time calculated by PRSH LENGTH LINES+MoE, in this case, the clock time t223. This pre-shutter synchronization signal is treated as a signal equivalent to a signal MoE on the side of the sensor 11S, and the generation timing of a synchronization signal XVS is set on the basis of the clock time at which the pre-shutter synchronization signal is received. In the example depicted in FIG. 22, the sensor 11S generates a synchronization signal XVS at a clock time t225.

From the clock time t223, the sensor 11M and the sensor 11S each start imaging processing. Then, at a clock time t224, the center of exposure is reached in both the sensor 11M and the sensor 11S. That is, at the clock time t224, the state in which the centers of exposure synchronize between the sensor 11M and the sensor 11S is made.

In this manner, the pre-shutter synchronization signal is generated in the sensor 11M, and the timing set in consideration of the time corresponding to the difference in the center of exposure is employed as the generation timing of the pre-shutter synchronization signal. This can allow establishment of synchronization of the center of exposure from the first frame of the sensor 11S.

<Synchronization of Center of Exposure during Multi-frame Imaging>

With reference to FIG. 23, a description is given of synchronization of the center of exposure during multi-frame imaging.

The multi-frame imaging is imaging to acquire imaging data of N images which are obtained by imaging and which are different in the exposure time. With reference to an example depicted in FIG. 23, a description is given of the exposure timings when three images obtained by imaging are acquired. In FIG. 23, CIT_L, CIT_M, and CIT_S indicate the respective exposure times when three times of imaging are performed within one frame. The exposure times in the respective exposures are set to different times, for example, in order to ensure the dynamic range of a signal. CIT_L is longer than the other exposure times (defined as long accumulation). CIT_S is shorter than the other exposure times (defined as short accumulation). CIT_M is an exposure time between the long accumulation and the short accumulation (defined as middle accumulation).

In the case of the multi-frame imaging, for example, as depicted in FIG. 23, exposure by the middle accumulation is started after the completion of exposure by the long accumulation. Then, exposure by the short accumulation is started after the completion of the exposure by the middle accumulation. Through the completion of the exposure by the short accumulation, the three times of imaging are performed.

DOL (Digital Over Lap) can be applied as the imaging system of the sensor 11 which performs such multi-frame imaging. The DOL is a system in which the long accumulation, the middle accumulation, and the short accumulation are read out in units of line in a time-sharing manner, and one image is output in each exposure. The DOL is a system in which the timings of the output overlap in units of line.

In the case of the multi-frame imaging, any of the following cases is selected: the case of synchronizing the centers of exposure in the long accumulation; the case of synchronizing the centers of exposure in the middle accumulation; and the case of synchronizing the centers of exposure in the short accumulation. In the example depicted in FIG. 23, the case in which the case of synchronizing the centers of exposure in the long accumulation is selected is depicted.

At a clock time t301, although not depicted in FIG. 23, the state in which the center of exposure in the long accumulation in the sensor 11M synchronizes with the center of exposure in the long accumulation in the sensor 11S is made. At the clock time t301, the sensor 11M, in which the center of exposure is reached, generates a signal MoE and supplies the signal MoE to the sensor 11S. The sensor 11S receives the signal MoE, and performs computation for matching with the center of exposure on the side of the sensor 11M from this signal MoE to generate a synchronization signal based on the computation. The synchronization signal to be generated is generated at a clock time t303 in FIG. 23.

At a clock time t302, the state in which the center of exposure in the long accumulation in the sensor 11M synchronizes with the center of exposure in the long accumulation in the sensor 11S is made. In this manner, imaging with synchronization of the center of exposure can be performed also in the case of the multi-frame imaging.

In the case of the multi-frame imaging, which of the exposure times of the long accumulation, the middle accumulation, and the short accumulation is selected as the exposure time in which the center of exposure is synchronized is set by an instruction from the control section 12. Alternatively, for example, the setting may be fixed at the setting for synchronizing the center of exposure of a predetermined exposure time, such as matching the center of exposure of the long accumulation.

In the case in which the control section 12 is allowed to set which of the exposure times of the long accumulation, the middle accumulation, and the short accumulation is selected as the exposure time in which the center of exposure is synchronized, the computation formula depends on which exposure time is selected as the exposure time in which the center of exposure is synchronized. For example, on the basis of the case of synchronizing the centers of exposure in the long accumulation, an offset value is subtracted in computation for synchronizing the centers of exposure in the middle accumulation or the short accumulation.

In the case of synchronizing the centers of exposure in the long accumulation, as with the above-described case, the timing of generation of a synchronization signal XVS is set with use of (CIT(S)/2 - height(S)/2) on the side of the sensor 11S.

In the case of the middle accumulation, the timing of generation of the synchronization signal XVS is set with use of a value obtained by subtracting an offset value (OFFSET_M(CIT_M)) from (CIT_M(S)/2 - height (S)/2). That is, the timing of generation of the synchronization signal XVS is set with use of (CIT_M(S)/2 - height(S)/2) - (OFFSET_M(CIT_M)). The offset value (OFFSET_M(CIT_M)) is a value which is set in advance as the offset value used in the middle accumulation.

In the case of the short accumulation, the timing of generation of the synchronization signal XVS is set with use of a value obtained by subtracting an offset value (OFFSET_S(CIT_M + CIT_S)) from (CIT_S(S)/2 - height(S)/2). That is, the timing of generation of the synchronization signal XVS is set with use of (CIT_S(S)/2 - height(S)/2) - (OFFSET_S(CIT_M + CIT_S)). The offset value (OFFSET_S(CIT_M + CIT_S)) is a value which is set in advance as the offset value used in the short accumulation.

In this manner, the centers of exposure in any of the long accumulation, the middle accumulation, and the short accumulation can be synchronized.

<Case of Controlling Center of Exposure by Control Section 12>

The above-described embodiment has been explained by taking as an example the case in which the sensor 11M on the master side and the sensor 11S on the slave side exist. As described with reference to FIG. 4, the present technology can be applied also to the system in which the sensor 11d-1 to the sensor 11d-3 operate as slaves and the control section 12d operates as a master.

In the case in which the control section 12 operates as a master, the control section 12 is configured to generate a synchronization signal and supply the synchronization signal to each sensor 11 through the signal line 14. As this synchronization signal, a signal indicating that imaging is at the center of exposure is supplied from the control section 12 to the sensors 11. The signal corresponding to a signal MoE in the above-described embodiment is supplied from the control section 12 to the sensors 11. This supplied signal is represented as a signal MoE also in an embodiment to be described with reference to FIG. 24.

At a clock time t331, a sensor 11S-a and a sensor 11S-b each receive the signal MoE as the synchronization signal from the control section 12. As with the above-described embodiment, the sensor 11S-a and the sensor 11S-b each treat the received signal MoE as the timing of the center of exposure and generate a synchronization signal XVS by performing computation using the signal MoE.

On the side of the sensor 11S-a, a synchronization signal XVS is generated and readout of a frame is started at a clock time obtained by adding a time calculated by (CIT/2 - height/2) to the timing of the reception of the signal MoE. In the example depicted in FIG. 24, the sensor 11S-a generates the synchronization signal XVS at a clock time t333. In the sensor 11S-a, CIT in (CIT/2 - height/2) corresponds to the exposure time of the sensor 11S-a, and height is the height (the number of lines) in the vertical direction regarding the pixel array unit of the sensor 11S-a.

On the side of the sensor 11S-b, a synchronization signal XVS is generated and readout of a frame is started at a clock time obtained by adding a time calculated by (CIT/2 - height/2) to the timing of the reception of the signal MoE. In the example depicted in FIG. 24, the sensor 11S-b generates the synchronization signal XVS at a clock time t332. In the sensor 11S-b, CIT in (CIT/2 - height/2) corresponds to the exposure time of the sensor 11S-b, and height is the height (the number of lines) in the vertical direction regarding the pixel array unit of the sensor 11S-b.

In this manner, the control section 12 which controls the sensors 11 monitors the sensors 11, and generates the signal MoE functioning as the synchronization signal and supplies the signal MoE to the sensor 11 which the control section 12 controls, at the timing at which imaging is at the center of exposure in the sensor 11. Each sensor 11 adjusts the image pickup timing by adding or subtracting the value calculated from the exposure time of the sensor 11 itself and the number of lines of the pixel array unit on the basis of the signal MoE.

As above, the present technology can be applied also to the system in which the control section 12 is employed as a master and the sensors 11 are employed as slaves.

<Case in Which Sensor 11 Is Autonomously Operating>

The present technology can be applied also to the system in which the sensor 11a-1 to the sensor 11a-3 all operate as masters as described with reference to FIG. 1 and the system in which the sensor 11c-1 to the sensor 11c-3 operate as a master or a slave as described with reference to FIG. 3. In the case in which the state in which the sensor 11 is functioning as a master, in other words, the state in which the sensor 11 is operating without receiving an instruction from the other sensors 11, is expressed as the state in which the sensor 11 is autonomously operating, the present technology can be applied also to the case in which the sensors 11 are all autonomously operating.

For example, in the case in which all the sensors are operating as masters as in the system depicted in FIG. 1, processing is performed such that one of them is regarded as a master and the other two are regarded as slaves (described as autonomous operating slaves). In this case, the master and the autonomous operating slave are in such a relation as to give and receive a signal MoE, and this relation is similar to the above-described relation between the master and the slave in that it is a relation in which the master side supplies the signal MoE and the autonomous operating slave side receives the signal MoE. However, they are not in the relation between the master and the slave regarding other operations.

As described with reference to FIG. 25, in the case in which the sensors 11 are autonomously operating, the image pickup timing is aligned by gradually adjusting the FLL in the sensor 11 set as the autonomous operating slave. Conventionally, the adjustment is performed in accordance with the timing of the synchronization signal XVS. In the present technology, such adjustment operation as to align the centers of exposure is performed by feeding back the timing of reception of the signal MoE to adjustment of the generation timing of the synchronization signal XVS.

At a clock time t361, the center of exposure is reached in the sensor 11M, and the sensor 11M generates a signal MoE and supplies the signal MoE to the side of the sensor 11S. The center of exposure is reached at a clock time t362 in the sensor 11S set as the autonomous operating slave. The sensor 11S regards the clock time resulting from the elapse of (CIT(S)/2 - height(S)/2) from the clock time t361 as a clock time t363. The sensor 11S generates a synchronization signal XVS at a clock time t364.

In the case of such a situation, the center of exposure in the sensor 11M is at the clock time t361, and the center of exposure in the sensor 11S is at the clock time t362. Thus, the centers of exposure deviate from each other by the time of (clock time t362 - clock time t361). This deviation corresponds to the difference between the clock time t364 and the clock time t363.

If a synchronization signal XVS is generated at the timing of the clock time t363, the centers of exposure are aligned at the clock time t361. That is, in this case, to align the centers of exposure, the synchronization signal XVS needs to be generated at the clock time t363 on the side of the sensor 11S. However, the synchronization signal XVS is generated at the clock time t364 in actuality.

If this difference represented by (clock time t364 - clock time t363) is eliminated, the centers of exposure of the sensor 11M and the sensor 11S are aligned. Processing which causes this difference to be gradually eliminated is performed on the side of the sensor 11S on the autonomous operating slave side. For example, adjustment which causes the difference to become half or less is performed for a synchronization signal XVS to be generated at the next timing. Processing of making the adjustment by adding or subtracting a predetermined number of steps (ΔStep) to cause the difference to converge is performed.

Although it has been explained that the processing is performed such that the difference is gradually eliminated, it is also possible to allow execution of processing which eliminates the difference at once. When being small, the difference may be eliminated at once. However, if the processing which eliminates the difference at once is performed when the difference is large, there is a possibility of occurrence of failure of image pickup operation. For example, on the side of the sensor 11S, the exposure time suddenly changes, and there is a possibility of failure of image pickup operation.

It is possible to make a configuration to allow execution of processing which permits the state in which the centers of exposure do not synchronize for a while, while suppressing failure of image pickup operation by gradually adjusting the timing in response to change in the exposure time.

As above, even in the system in which each sensor 11 is autonomously operating, the centers of exposure can be aligned by execution of the processing for gradually eliminating the deviation in the center of exposure by each sensor 11. Also in this case, the centers of exposure can be aligned by the processing by each sensor 11, without an instruction from the control section 12.

<Synchronization of Center of Exposure at Freely-Selected Position in Image>

In the above-described explanation, the description has been given by taking as the example the case in which the center of exposure corresponds with the center in the image. In other words, the description has been given of processing of matching the centers of exposure with each other in the respective sensors 11 in the case in which, in an exposure period of the line located at the center in the vertical direction of the pixel array unit, the position at the center of the exposure period is regarded as the center of exposure.

The present technology can be applied also in the case in which the center of exposure is set at a freely-selected position in the image. For example, in the case in which the angles of view of the sensor 11M and the sensor 11S are different from each other with the sensor 11M imaging the position of the face of a subject and the sensor 11S imaging the whole of the subject, it is also possible to perform control to treat the position of the face of the subject as the center of exposure to prevent a blur when images of the face are synthesized.

A description is given with reference to FIG. 26. The basic operation is similar to that in the case described with reference to FIG. 9, and hence, detailed description is omitted as appropriate. At a clock time t401, exposure of the sensor 11M is started. At a clock time t402, exposure of the sensor 11S is started.

At a clock time t403, the center of exposure is reached in the sensor 11M. The center of exposure of the sensor 11M is the center when a position which is located at the center in a horizontal direction in the image and is located at the center also in the vertical direction is treated as the freely-selected position. At the clock time t403, the center of exposure is reached also on the side of the sensor 11S. The center of exposure on the side of the sensor 11S is the center when a position which is located at the center in the horizontal direction in the image and is located on a lower side in the image in the vertical direction is treated as the freely-selected position.

As above, the positions of the centers of exposure of the sensor 11M and the sensor 11S can be set to the freely-selected position in the image. Here, the description has been given by taking as the example the case in which the line at the center in the image is treated as the center of exposure on the side of the sensor 11M. However, it is also possible to treat a predetermined line on the lower side in the image as the center of exposure also on the side of the sensor 11M as with the side of the sensor 11S.

The position of the line treated as the center of exposure in the image obtained by imaging by the sensor 11M and the position of the line treated as the center of exposure in the image obtained by imaging by the sensor 11S may be the same line or be different lines.

In the example depicted in FIG. 26, the synchronization signal XVS generated by the sensor 11M at a clock time t405 is at a timing later than the center of exposure at the clock time t403 by (CIT(M)/2 - height(M)/2)

In the example depicted in FIG. 26, the synchronization signal XVS generated by the sensor 11S at a clock time t404 is at a timing later than the center of exposure at the clock time t403 by (CIT(S)/2 - Position(S)). On the side of the sensor 11S, a freely-selected line in the image, for example, a line on the lower side in the image, is treated as the center of exposure, and hence, the timing of imaging of the position of the line in the image is subtracted from CIT(S)/2 as Position(S). Position(S) is a value which becomes height(S)/2 in the case in which the line at the center in the image is treated as the center of exposure.

In this manner, in a computation formula to set the timing of generation of the synchronization signal, the value calculated from the position of the freely-selected line in the image is employed as the value subtracted from the exposure time (corresponding to CIT). This can establish synchronization of the centers of exposure between the sensor 11M and the sensor 11S regarding the center of exposure at the freely-selected position.

With reference to FIG. 27, a further description is given of the synchronization of the center of exposure at the freely-selected position described with reference to FIG. 26. An upper diagram of FIG. 27 is a diagram obtained by integrating diagrams from the clock time t401 to the clock time t405 regarding the sensor 11M and the sensor 11S depicted in FIG. 26. As described above, the time from the clock time t401 to the clock time t405 is the exposure time of the sensor 11M, and the clock time t403 is the center of exposure at the center of the image of the sensor 11M. The time from the clock time t402 to the clock time t404 is the exposure time of the sensor 11S, and the clock time t403 is the center of exposure at the freely-selected position in the sensor 11S.

A lower diagram of FIG. 27 is a view depicting an example of images picked up by the respective sensors 11M and 11S and an image obtained by synthesizing these images. The sensor 11M performs imaging of an image M including the upper body including the face of a subject, and the sensor 11S picks up an image S in which the face of the subject is located at the center. In the image M, the center of exposure is the line at the center of the image, and the line is depicted by a black line in the view. The line which is depicted by this black line and is located at the center in the image M is the line treated as the exposure target at the clock time t403, and is the position treated as the center of exposure of the sensor 11M.

In the image S, the center of exposure is the line on which the face is located on the upper side of the image, and the line is depicted by a black line in the view. The line which is depicted by this black line and is located on the upper side in the image S is the line treated as the exposure target at the clock time t403, and is the position treated as the center of exposure of the sensor 11S.

In the example depicted in FIG. 27, the position of the face is treated as the center of exposure in both the image M and the image S. The image M and the image S are images in which the centers of exposure are matched with each other at the position of the face. Hence, an image (M + S) obtained by synthesizing the image M and the image S is an image in which at least a blur is suppressed in the face of the subject.

Synchronizing the centers of exposure makes it possible to allow at least an image picked up at the position set as the center of exposure to be an image free from a blur, for example, even in the case in which a subject with motion is picked up.

By setting the freely-selected position in the image as the centers of exposure and performing control to cause the centers of exposure to be aligned among a plurality of sensors 11 as above, imaging can be performed such that a blur does not occur in a subject, for example, even in the case in which the subject does not exist at the center of the image.

For example, in the case in which the control section 12 determines that a subject does not exist at the center of the image, the control section 12 supplies the sensor 11M and the sensor 11S with information regarding the position at which the subject is picked up, for example, in the above-described example, information corresponding to Position. On the basis of the information regarding the position at which the subject is picked up, the information being supplied from the control section 12, the sensor 11M and the sensor 11S can set the center of exposure at the position.

The above-described processing is performed such that the centers of exposure are set at the position at which a subject is picked up and the centers of exposure are aligned among the plurality of sensors 11. This can make an image in which at least a blur is suppressed in the image of the part at which the centers of exposure are aligned, even in the case in which images picked up by the plurality of sensors 11 are synthesized.

When the center of exposure according to a subject is set in the case in which the subject does not exist at the center of the image as above, there is a possibility of failure of image pickup operation as will be described with reference to FIG. 28. Therefore, a mechanism for preventing the failure may be made as will be described with reference to FIG. 29.

In the example depicted in FIG. 28, the exposure time of the sensor 11M is short. In such a case in which the exposure time of the sensor 11M is short, the generation timing of a synchronization signal XVS is set on the basis of condition 2 in the sensor 11S. Condition 2 is described again.

Condition 2 In the case of (CIT(S)/2 - height(S)/2) < 0

$\rightarrow$ feedback to the FLL (synchronization signal XVS is a set value)

The following condition needs to be satisfied for the feedback to the FLL.

$$\mathtt{FLL + (CIT(S)/2 - height(S)/2) > CIT}$$

When this formula is deformed, the following formula is obtained.

$$\mathtt{FLL > (CIT(S)/2 + height(S)/2)}$$

In the case in which a freely-selected position is treated as the center of exposure, this formula becomes as follows.

$$\mathtt{FLL > (CIT(S)/2 + Position)}$$

Thus, in the case in which FLL < (CIT(S)/2 + Position) is satisfied, there is a possibility of failure of image pickup operation. In this case, there is a possibility that it becomes impossible to start exposure because the FLL is too short. In the example depicted in FIG. 28, at a clock time t431, the sensor 11M and the sensor 11S each generate a synchronization signal XVS.

At a clock time t432, the sensor 11S starts exposure. At a clock time t433, the center of exposure is reached in the sensor 11M, and the sensor 11M generates a signal MoE and supplies the signal MoE to the sensor 11S. At the clock time t433, the side of the sensor 11S is in the state in which exposure has already been started. There is a possibility of failure of image pickup operation in the case in which exposure needs to be started earlier than the signal MoE used as a signal corresponding to a synchronization signal as above.

To avoid occurrence of such failure, processing in which an offset is taken into consideration is performed as will be described with reference to FIG. 29.

At a clock time t461, the sensor 11M and the sensor 11S each generate a synchronization signal XVS.

At a clock time t462, the sensor 11M generates a signal MoE output at the time of the center of exposure and supplies the signal MoE to the sensor 11S. Although the true timing of the output of the signal MoE by the sensor 11M is a clock time t464, the sensor 11M generates a signal MoE at the clock time t462 earlier than that by an offset value and supplies the signal MoE to the sensor 11S.

At a clock time t463, the sensor 11S starts exposure. In this case, the exposure is started at the clock time t463 after the signal MoE used as a signal corresponding to a synchronization signal is received at the clock time t462. Hence, failure of image pickup operation can be prevented. Verifying this point as in the above-described formulas provides the following.

If FLL + Offset > (CIT(S)/2 + Position) is satisfied by using the offset, failure of image pickup operation can be prevented. In addition, by setting Offset to Offset = MAX CIT/2 = FLL/2, failure of image pickup operation can be surely prevented.

In the case in which the side of the sensor 11S receives the signal MoE at the timing set in consideration of the offset value at the clock time t262, the sensor 11S returns the clock time at which processing for generating a synchronization signal is performed to the clock time t464, which is the timing at which the signal MoE is originally supposed to be received. Then, on the assumption that the signal MoE is received at the clock time t464, the sensor 11S performs computation as with the above-described embodiment and adjusts the generation timing of a synchronization signal XVS.

As above, in the case in which a freely-selected position is treated as the center of exposure, it is also possible to make a configuration to allow execution of processing which prevents failure of image pickup operation by using an offset value or the like.

<Limits on Range of Center of Exposure>

As described above, the processing for matching with the center of exposure on the side of the sensor 11M is performed on the side of the sensor 11S. Since the timing of generation of a synchronization signal internally generated for matching the center of exposure is adjusted, there are limits as will be described with reference to FIGS. 30 and 31 on the condition of the exposure time and the range which can be taken by the timing of the center of exposure. It is preferable that various limits be set in consideration of such a range and the setting be made such that processing is performed within the limits.

FIG. 30 is a view for explaining the range of the center of exposure when frame length = readout time = maximum exposure time is satisfied. In the example depicted in FIG. 30, the exposure time of the line located at the center in the horizontal direction (row direction) of the pixel array unit of the sensor 11M is from a clock time t503 to a clock time t506.

The range which can be taken by the center of exposure of the sensor 11M is the time from the clock time t503 to the clock time t506. If the center of exposure on the side of the sensor 11S also falls within the time from the clock time t503 to the clock time t506, the center of exposure can be aligned with the center of exposure of the sensor 11M within this range. The maximum of the difference ($\Delta$MoE) between the center of exposure of the sensor 11M and the center of exposure of the sensor 11S is kept equal to or less than FLL/2.

FIG. 31 is a view for explaining the range of the center of exposure when frame length = readout time is satisfied and the minimum (0) exposure time is set. In the example depicted in FIG. 31, the exposure time of the sensor 11M is short, and the center of exposure also exists in a short time around a clock time t536. The center of exposure of the sensor 11S is at a clock time t533 and exists at a timing earlier than a clock time t535 of the start of readout by the sensor 11M.

In this case, the difference ($\Delta$MoE) between the center of exposure of the sensor 11M and the center of exposure of the sensor 11S is the time from the clock time t533 to the clock time t536. The maximum of this difference is kept equal to or less than the synchronization signal XVS.

In view of these ranges which can be taken by the center of exposure, the range which can be taken as a freely-selected position (if the freely-selected position deviates, the difference in the center of exposure also increases in some cases) needs to be set, for example, in the case of aligning the centers of exposure at the freely-selected position. Moreover, the tilt of readout (AD time) in the sensor 11S, for example, is also set to a tilt which falls within the range which can be taken by the center of exposure.

<Examples of Application to Electronic Equipment>

The present technology can be applied to overall pieces of electronic equipment using an image pickup element for an image capturing section (photoelectric conversion section), such as image pickup apparatuses including digital still cameras, video cameras, and the like, portable terminal apparatuses having an image pickup function, and copy machines using an image pickup element for an image reading section. The image pickup element may have a form formed as one chip, or may have a module-like form which is obtained by integrally packaging an image pickup section and a signal processing section or an optical system and which has an image pickup function.

FIG. 32 is a block diagram depicting a configuration example of an image pickup apparatus as electronic equipment to which the present technology is applied.

An image pickup element 1000 of FIG. 32 includes an optical section 1001 including a lens group and the like, an image pickup element (image pickup device) 1002, and a DSP (Digital Signal Processor) circuit 1003 which is a camera signal processing circuit. Further, the image pickup element 1000 also includes a frame memory 1004, a display section 1005, a recording section 1006, an operation section 1007, and a power supply section 1008. The DSP circuit 1003, the frame memory 1004, the display section 1005, the recording section 1006, the operation section 1007, and the power supply section 1008 are mutually connected through a bus line 1009.

The optical section 1001 captures incident light (image light) from a subject and forms an image on an image pickup surface of the image pickup element 1002. The image pickup element 1002 converts the light amount of the incident light from which the image is formed on the image pickup surface by the optical section 1001, to an electrical signal in units of pixel, and outputs the electrical signal as a pixel signal.

The display section 1005 includes, for example, a thin display such as an LCD (Liquid Crystal Display) or an organic EL (Electro Luminescence) display, and displays a moving image or a still image picked up by the image pickup element 1002. The recording section 1006 records the moving image or the still image picked up by the image pickup element 1002 in a recording medium such as a hard disk or a semiconductor memory.

The operation section 1007 issues an operation command regarding various functions which the image pickup element 1000 has, under operation by a user. The power supply section 1008 provides various power supplies which serve as operation power supplies for the DSP circuit 1003, the frame memory 1004, the display section 1005, the recording section 1006, and the operation section 1007 to these provision targets as appropriate.

The imaging apparatuses 10a to 10d depicted in FIGS. 1 to 4 can be applied to part of the image pickup apparatus depicted in FIG. 32.

<Recording Medium>

The above-described series of processing can be performed by hardware and be performed also by software. In the case of performing the series of processing by software, a program included in the software is installed into a computer. Here, the computer includes a computer incorporated in dedicated hardware or, for example, a general-purpose personal computer or the like which can perform various functions by installation of various programs.

FIG. 33 is a block diagram depicting a configuration example of hardware of a computer which performs the above-described series of processing by a program. In the computer, a CPU (Central Processing Unit) 2001, a ROM (Read Only Memory) 2002, and a RAM (Random Access Memory) 2003 are mutually connected by a bus 2004. An input/output interface 2005 is further connected to the bus 2004. To the input/output interface 2005, an input section 2006, an output section 2007, a storage section 2008, a communication section 2009, and a drive 2010 are connected.

The input section 2006 includes a keyboard, a mouse, a microphone, and the like. The output section 2007 includes a display, a speaker, and the like. The storage section 2008 includes a hard disk, a non-volatile memory, and the like. The communication section 2009 includes a network interface and the like. The drive 2010 drives a removable recording medium 2011 such as a magnetic disc, an optical disc, a magneto-optical disc, or a semiconductor memory.

In the computer configured as above, the CPU 2001 loads, for example, a program stored in the storage section 2008 into the RAM 2003 through the input/output interface 2005 and the bus 2004 and executes the program. The above-described series of processing is thus performed.

For example, the program to be executed by the computer (CPU 2001) can be recorded in the removable recording medium 2011 as a package medium or the like and be provided. Further, the program can be provided through a wired or wireless transmission medium such as a local area network, the Internet, or digital satellite broadcasting.

In the computer, the program can be installed in the storage section 2008 through the input/output interface 2005 by mounting the removable recording medium 2011 in the drive 2010. Moreover, the program can be received by the communication section 2009 through a wired or wireless transmission medium and be installed in the storage section 2008. Besides, the program can be installed in the ROM 2002 or the storage section 2008 in advance.

It is to be noted that the program executed by the computer may be a program regarding which processing is performed in a time-series manner along the order of description in the present specification or a program regarding which processing is performed concurrently or at a necessary timing such as a timing at which a call is made.

<Example of Application to Endoscopic Surgery System>

The technology according to the present disclosure (present technology) can be applied to various products. For example, the technology according to the present disclosure may be applied to an endoscopic surgery system.

FIG. 34 is a view depicting an example of a schematic configuration of an endoscopic surgery system to which the technology according to an embodiment of the present disclosure (present technology) can be applied.

In FIG. 34, a state is illustrated in which a surgeon (medical doctor) 11131 is using an endoscopic surgery system 11000 to perform surgery for a patient 11132 on a patient bed 11133. As depicted, the endoscopic surgery system 11000 includes an endoscope 11100, other surgical tools 11110 such as a pneumoperitoneum tube 11111 and an energy device 11112, a supporting arm apparatus 11120 which supports the endoscope 11100 thereon, and a cart 11200 on which various apparatus for endoscopic surgery are mounted.

The endoscope 11100 includes a lens barrel 11101 having a region of a predetermined length from a distal end thereof to be inserted into a body cavity of the patient 11132, and a camera head 11102 connected to a proximal end of the lens barrel 11101. In the example depicted, the endoscope 11100 is depicted which includes as a rigid endoscope having the lens barrel 11101 of the hard type. However, the endoscope 11100 may otherwise be included as a flexible endoscope having the lens barrel 11101 of the flexible type.

The lens barrel 11101 has, at a distal end thereof, an opening in which an objective lens is fitted. A light source apparatus 11203 is connected to the endoscope 11100 such that light generated by the light source apparatus 11203 is introduced to a distal end of the lens barrel 11101 by a light guide extending in the inside of the lens barrel 11101 and is irradiated toward an observation target in a body cavity of the patient 11132 through the objective lens. It is to be noted that the endoscope 11100 may be a forward-viewing endoscope or may be an oblique-viewing endoscope or a side-viewing endoscope.

An optical system and an image pickup element are provided in the inside of the camera head 11102 such that reflected light (observation light) from the observation target is condensed on the image pickup element by the optical system. The observation light is photo-electrically converted by the image pickup element to generate an electric signal corresponding to the observation light, namely, an image signal corresponding to an observation image. The image signal is transmitted as RAW data to a CCU 11201.

The CCU 11201 includes a central processing unit (CPU), a graphics processing unit (GPU) or the like and integrally controls operation of the endoscope 11100 and a display apparatus 11202. Further, the CCU 11201 receives an image signal from the camera head 11102 and performs, for the image signal, various image processes for displaying an image based on the image signal such as, for example, a development process (demosaic process).

The display apparatus 11202 displays thereon an image based on an image signal, for which the image processes have been performed by the CCU 11201, under the control of the CCU 11201.

The light source apparatus 11203 includes a light source such as, for example, a light emitting diode (LED) and supplies irradiation light upon imaging of a surgical region to the endoscope 11100.

An inputting apparatus 11204 is an input interface for the endoscopic surgery system 11000. A user can perform inputting of various kinds of information or instruction inputting to the endoscopic surgery system 11000 through the inputting apparatus 11204. For example, the user would input an instruction or a like to change an image pickup condition (type of irradiation light, magnification, focal distance or the like) by the endoscope 11100.

A treatment tool controlling apparatus 11205 controls driving of the energy device 11112 for cautery or incision of a tissue, sealing of a blood vessel or the like. A pneumoperitoneum apparatus 11206 feeds gas into a body cavity of the patient 11132 through the pneumoperitoneum tube 11111 to inflate the body cavity in order to secure the field of view of the endoscope 11100 and secure the working space for the surgeon. A recorder 11207 is an apparatus capable of recording various kinds of information relating to surgery. A printer 11208 is an apparatus capable of printing various kinds of information relating to surgery in various forms such as a text, an image or a graph.

It is to be noted that the light source apparatus 11203 which supplies irradiation light when a surgical region is to be imaged to the endoscope 11100 may include a white light source which includes, for example, an LED, a laser light source or a combination of them. Where a white light source includes a combination of red, green, and blue (RGB) laser light sources, since the output intensity and the output timing can be controlled with a high degree of accuracy for each color (each wavelength), adjustment of the white balance of a picked up image can be performed by the light source apparatus 11203. Further, in this case, if laser beams from the respective RGB laser light sources are irradiated time-divisionally on an observation target and driving of the image pickup elements of the camera head 11102 are controlled in synchronism with the irradiation timings. Then images individually corresponding to the R, G and B colors can be also picked up time-divisionally. According to this method, a color image can be obtained even if color filters are not provided for the image pickup element.

Further, the light source apparatus 11203 may be controlled such that the intensity of light to be outputted is changed for each predetermined time. By controlling driving of the image pickup element of the camera head 11102 in synchronism with the timing of the change of the intensity of light to acquire images time-divisionally and synthesizing the images, an image of a high dynamic range free from underexposed blocked up shadows and overexposed highlights can be created.

Further, the light source apparatus 11203 may be configured to supply light of a predetermined wavelength band ready for special light observation. In special light observation, for example, by utilizing the wavelength dependency of absorption of light in a body tissue to irradiate light of a narrow band in comparison with irradiation light upon ordinary observation (namely, white light), narrow band observation (narrow band imaging) of imaging a predetermined tissue such as a blood vessel of a superficial portion of the mucous membrane or the like in a high contrast is performed. Alternatively, in special light observation, fluorescent observation for obtaining an image from fluorescent light generated by irradiation of excitation light may be performed. In fluorescent observation, it is possible to perform observation of fluorescent light from a body tissue by irradiating excitation light on the body tissue (autofluorescence observation) or to obtain a fluorescent light image by locally injecting a reagent such as indocyanine green (ICG) into a body tissue and irradiating excitation light corresponding to a fluorescent light wavelength of the reagent upon the body tissue. The light source apparatus 11203 can be configured to supply such narrowband light and/or excitation light suitable for special light observation as described above.

FIG. 35 is a block diagram depicting an example of a functional configuration of the camera head 11102 and the CCU 11201 depicted in FIG. 34.

The camera head 11102 includes a lens unit 11401, an image pickup unit 11402, a driving unit 11403, a communication unit 11404 and a camera head controlling unit 11405. The CCU 11201 includes a communication unit 11411, an image processing unit 11412 and a control unit 11413. The camera head 11102 and the CCU 11201 are connected for communication to each other by a transmission cable 11400.

The lens unit 11401 is an optical system, provided at a connecting location to the lens barrel 11101. Observation light taken in from a distal end of the lens barrel 11101 is guided to the camera head 11102 and introduced into the lens unit 11401. The lens unit 11401 includes a combination of a plurality of lenses including a zoom lens and a focusing lens.

The number of image pickup elements which is included by the image pickup unit 11402 may be one (single-plate type) or a plural number (multi-plate type). Where the image pickup unit 11402 is configured as that of the multi-plate type, for example, image signals corresponding to respective R, G and B are generated by the image pickup elements, and the image signals may be synthesized to obtain a color image. The image pickup unit 11402 may also be configured so as to have a pair of image pickup elements for acquiring respective image signals for the right eye and the left eye ready for three dimensional (3D) display. If 3D display is performed, then the depth of a living body tissue in a surgical region can be comprehended more accurately by the surgeon 11131. It is to be noted that, where the image pickup unit 11402 is configured as that of stereoscopic type, a plurality of systems of lens units 11401 are provided corresponding to the individual image pickup elements.

Further, the image pickup unit 11402 may not necessarily be provided on the camera head 11102. For example, the image pickup unit 11402 may be provided immediately behind the objective lens in the inside of the lens barrel 11101.

The driving unit 11403 includes an actuator and moves the zoom lens and the focusing lens of the lens unit 11401 by a predetermined distance along an optical axis under the control of the camera head controlling unit 11405. Consequently, the magnification and the focal point of a picked up image by the image pickup unit 11402 can be adjusted suitably.

The communication unit 11404 includes a communication apparatus for transmitting and receiving various kinds of information to and from the CCU 11201. The communication unit 11404 transmits an image signal acquired from the image pickup unit 11402 as RAW data to the CCU 11201 through the transmission cable 11400.

In addition, the communication unit 11404 receives a control signal for controlling driving of the camera head 11102 from the CCU 11201 and supplies the control signal to the camera head controlling unit 11405. The control signal includes information relating to image pickup conditions such as, for example, information that a frame rate of a picked up image is designated, information that an exposure value upon image picking up is designated and/or information that a magnification and a focal point of a picked up image are designated.

It is to be noted that the image pickup conditions such as the frame rate, exposure value, magnification or focal point may be designated by the user or may be set automatically by the control unit 11413 of the CCU 11201 on the basis of an acquired image signal. In the latter case, an auto exposure (AE) function, an auto focus (AF) function and an auto white balance (AWB) function are incorporated in the endoscope 11100.

The camera head controlling unit 11405 controls driving of the camera head 11102 on the basis of a control signal from the CCU 11201 received through the communication unit 11404.

The communication unit 11411 includes a communication apparatus for transmitting and receiving various kinds of information to and from the camera head 11102. The communication unit 11411 receives an image signal transmitted thereto from the camera head 11102 through the transmission cable 11400.

Further, the communication unit 11411 transmits a control signal for controlling driving of the camera head 11102 to the camera head 11102. The image signal and the control signal can be transmitted by electrical communication, optical communication or the like.

The image processing unit 11412 performs various image processes for an image signal in the form of RAW data transmitted thereto from the camera head 11102.

The control unit 11413 performs various kinds of control relating to image picking up of a surgical region or the like by the endoscope 11100 and display of a picked up image obtained by image picking up of the surgical region or the like. For example, the control unit 11413 creates a control signal for controlling driving of the camera head 11102.

Further, the control unit 11413 controls, on the basis of an image signal for which image processes have been performed by the image processing unit 11412, the display apparatus 11202 to display a picked up image in which the surgical region or the like is imaged. Thereupon, the control unit 11413 may recognize various objects in the picked up image using various image recognition technologies. For example, the control unit 11413 can recognize a surgical tool such as forceps, a particular living body region, bleeding, mist when the energy device 11112 is used and so forth by detecting the shape, color and so forth of edges of objects included in a picked up image. The control unit 11413 may cause, when it controls the display apparatus 11202 to display a picked up image, various kinds of surgery supporting information to be displayed in an overlapping manner with an image of the surgical region using a result of the recognition. Where surgery supporting information is displayed in an overlapping manner and presented to the surgeon 11131, the burden on the surgeon 11131 can be reduced and the surgeon 11131 can proceed with the surgery with certainty.

The transmission cable 11400 which connects the camera head 11102 and the CCU 11201 to each other is an electric signal cable ready for communication of an electric signal, an optical fiber ready for optical communication or a composite cable ready for both of electrical and optical communications.

Here, while, in the example depicted, communication is performed by wired communication using the transmission cable 11400, the communication between the camera head 11102 and the CCU 11201 may be performed by wireless communication.

<Example of Application to Mobile Body>

The technology according to the present disclosure (present technology) can be applied to various products. For example, the technology according to the present disclosure may be implemented as an apparatus mounted in any kind of mobile body such as an automobile, an electric automobile, a hybrid electric automobile, a motorcycle, a bicycle, a personal mobility vehicle, an airplane, a drone, a ship, or a robot.

FIG. 36 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in FIG. 36, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of FIG. 36, an audio speaker 12061, a display section 12062, and an instrument panel 12063 are illustrated as the output device. The display section 12062 may, for example, include at least one of an on-board display and a head-up display.

FIG. 37 is a diagram depicting an example of the installation position of the imaging section 12031.

In FIG. 37, the imaging section 12031 includes imaging sections 12101, 12102, 12103, 12104, and 12105.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Incidentally, FIG. 37 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

In the present specification, the system represents the whole of an apparatus including a plurality of apparatuses.

It is to be noted that effects described in the present specification are merely examples and are not limitative and other effects may exist.

It is to be noted that embodiments of the present technology are not limited to the above-described embodiments and various changes are possible within such a range as not to depart from the gist of the present technology.

It is to be noted that the present technology can also take the following configurations.

(1) An imaging apparatus including:

a receiving section which receives a signal indicating a timing at which imaging by another sensor has reached a center of exposure; and
a setting section which sets, by employing a clock time at which the signal is received as a basis, a clock time at which a synchronization signal to make an instruction to start readout of a frame is generated.

(2) The imaging apparatus according to (1) above, in which
the center of exposure is located at a freely-selected position in a vertical direction in a picked up image.
(3) The imaging apparatus according to (2) above, in which
the setting section sets the clock time at which the synchronization signal is generated, by adding or subtracting, to or from the clock time employed as the basis, a value calculated from an exposure time and a time taken from exposure start to exposure of the freely-selected position.
(4) The imaging apparatus according to any of (1) through (3) above, in which
the setting section calculates a difference between the clock time at which the signal is received and a center of exposure of the imaging apparatus itself, and sets the clock time at which the synchronization signal is generated, such that the difference becomes small.
(5) The imaging apparatus according to any of (1) through (4) above, in which
the imaging apparatus is activated in a case in which the signal is received during idling.
(6) The imaging apparatus according to any of (1) through (5) above, in which,
in a case in which an instruction of activation is received from another apparatus during idling, a transition to an activated state is made, and setting in the setting section is started from a timing at which the signal is received by the receiving section.
(7) The imaging apparatus according to any of (1) through (6) above, in which,
in a case of an imaging mode in which a plurality of frames with different exposure times are acquired, the signal received is a signal indicating a timing at which imaging of the frame imaged with one exposure time among the different exposure times has reached a center of exposure.

(8) The imaging apparatus according to any of (1) through (7) above, in which

the signal is a signal output at a clock time earlier by an offset than the timing at which the center of exposure is reached in the other sensor, and

the setting section sets the clock time at which the synchronization signal is generated, on a basis of a clock time obtained by adding the offset to the clock time at which the signal is received.

(9) The imaging apparatus according to any of (1) through (8) above, in which,
in a case in which a command including information regarding a frame at which a parameter is reflected is received, processing is performed such that the parameter is reflected from the frame indicated by the information.
(10) The imaging apparatus according to any of (1) through (9) above, in which
the center of exposure is set at a position at which a subject is located in an image obtained by imaging.
(11) An imaging method executed by an imaging apparatus, including:

receiving a signal indicating a timing at which imaging by another sensor has reached a center of exposure, and setting, by employing a clock time at which the signal is received as a basis, a clock time at which a synchronization signal to make an instruction to start readout of a frame is generated.

(12) A program for causing a computer which controls an imaging apparatus, to perform processing including steps of:

receiving a signal indicating a timing at which imaging by another sensor has reached a center of exposure, and setting, by employing a clock time at which the signal is received as a basis, a clock time at which a synchronization signal to make an instruction to start readout of a frame is generated.

[Reference Signs List]

10: Imaging apparatus
11: Sensor
12: Control section
13: Signal line
14: Signal line
51: Imaging section
52: Signal processing section
53: Synchronization signal generating and outputting section
54: Control section
71: Imaging section
72: Signal processing section
73: Synchronization signal receiving section
74: Control section
1000: Image pickup element
1001: Optical section
1002: Image pickup element
1003: DSP circuit
1004: Frame memory
1005: Display section
1006: Recording section
1007: Operation section
1008: Power supply section
1009: Bus line

**Claims**

1.  An imaging apparatus comprising:

a receiving section which receives a signal indicating a timing at which imaging by another sensor has reached a center of exposure; and
a setting section which sets, by employing a clock time at which the signal is received as a basis, a clock time at which a synchronization signal to make an instruction to start readout of a frame is generated.

2. The imaging apparatus according to claim 1, wherein
the center of exposure is located at a freely-selected position in a vertical direction in a picked up image.

3. The imaging apparatus according to claim 2, wherein
the setting section sets the clock time at which the synchronization signal is generated, by adding or subtracting, to or from the clock time employed as the basis, a value calculated from an exposure time and a time taken from exposure start to exposure of the freely-selected position.

4. The imaging apparatus according to claim 1, wherein
the setting section calculates a difference between the clock time at which the signal is received and a center of exposure of the imaging apparatus itself, and sets the clock time at which the synchronization signal is generated, such that the difference becomes small.

5. The imaging apparatus according to claim 1, wherein
the imaging apparatus is activated in a case in which the signal is received during idling.

6. The imaging apparatus according to claim 1, wherein,
in a case in which an instruction of activation is received from another apparatus during idling, a transition to an activated state is made, and setting in the setting section is started from a timing at which the signal is received by the receiving section.

7. The imaging apparatus according to claim 1, wherein,
in a case of an imaging mode in which a plurality of frames with different exposure times are acquired, the signal received is a signal indicating a timing at which imaging of the frame imaged with one exposure time among the different exposure times has reached a center of exposure.

8. The imaging apparatus according to claim 1, wherein

the signal is a signal output at a clock time earlier by an offset than the timing at which the center of exposure is reached in the other sensor, and
the setting section sets the clock time at which the synchronization signal is generated, on a basis of a clock time obtained by adding the offset to the clock time at which the signal is received.

9. The imaging apparatus according to claim 1, wherein,
in a case in which a command including information regarding a frame at which a parameter is reflected is received, processing is performed such that the parameter is reflected from the frame indicated by the information.

10. The imaging apparatus according to claim 1, wherein
the center of exposure is set at a position at which a subject is located in an image obtained by imaging.

11. An imaging method executed by an imaging apparatus, comprising:

receiving a signal indicating a timing at which imaging by another sensor has reached a center of exposure, and setting, by employing a clock time at which the signal is received as a basis, a clock time at which a synchronization signal to make an instruction to start readout of a frame is generated.

12. A program for causing a computer which controls an imaging apparatus, to perform processing including steps of:

receiving a signal indicating a timing at which imaging by another sensor has reached a center of exposure, and setting, by employing a clock time at which the signal is received as a basis, a clock time at which a synchronization signal to make an instruction to start readout of a frame is generated.

# F I G . 1

FIG.2

EP 4 550 818 A1

# FIG.3

EP 4 550 818 A1

# FIG.4

EP 4 550 818 A1

# FIG.5

11M

IMAGING SECTION ~51

SIGNAL PROCESSING SECTION ~52

SYNCHRONIZATION SIGNAL GENERATING
AND OUTPUTTING SECTION ~53

CONTROL SECTION ~54

# F I G . 6

11S

IMAGING SECTION ~71

SIGNAL PROCESSING SECTION ~72

SYNCHRONIZATION SIGNAL
RECEIVING SECTION ~73

CONTROL SECTION ~74

FIG.7

EP 4 550 818 A1

FIG.8

FIG.9

FIG.10

$t_{17}$  $t_{18}$          $t_{19}$      $t_{20}$  $t_{21}$

11M    11S          →          11 (M+S)

FIG.11

# FIG.12

```
┌─────────────────────────────────────────────┐
(  START OF PROCESSING BY SENSOR 11M  )
└─────────────────────────────────────────────┘
                      │
                      ▼
┌─────────────────────────────────────────────┐
│         OBTAIN CENTER OF EXPOSURE           │ S11
└─────────────────────────────────────────────┘
                      │
                      ▼
┌─────────────────────────────────────────────┐
│ OUTPUT SIGNAL MoE INDICATING CENTER OF EXPOSURE │ S12
└─────────────────────────────────────────────┘
                      │
                      ▼
             (      END      )
```

# FIG.13

START OF PROCESSING BY SENSOR 11S

RECEIVE SIGNAL MoE — S31

$(CIT(S)/2 - height(S)/2) > 0?$ — S32

YES

NO

ADJUST SYNCHRONIZATION SIGNAL XVS — S33

$(CIT(S)/2 - height(S)/2) < 0?$ — S34

YES

NO

ADJUST FLL — S35

USE SET VALUES — S36

END

EP 4 550 818 A1

# FIG.14

EP 4 550 818 A1

FIG.15

FIG.16

# FIG.17

EP 4 550 818 A1

# FIG.18

FIG.19

EP 4 550 818 A1

FIG.20

# FIG.21

# FIG.22

FIG.23

# FIG.24

# FIG.25

EP 4 550 818 A1

# FIG.26

# FIG.27

# FIG.28

EP 4 550 818 A1

# FIG.29

EP 4 550 818 A1

# FIG.30

EP 4 550 818 A1

# FIG.31

# FIG.32

EP 4 550 818 A1

# FIG.33

F I G . 3 4

# FIG.35

11401
LENS UNIT

11402
IMAGE PICKUP UNIT

11404
COMMUNICATION UNIT

11403
DRIVING UNIT

11405
CAMERA HEAD CONTROLLING UNIT

CAMERA HEAD

11102

~11400

11412
IMAGE PROCESSING UNIT

11411
COMMUNICATION UNIT

11413

CONTROL UNIT

CCU

11201

# FIG.36

12000

**INTEGRATED CONTROL UNIT** 12050

MICROCOMPUTER 12051

SOUND/IMAGE OUTPUT SECTION 12052

VEHICLE-MOUNTED NETWORK I/F 12053

AUDIO SPEAKER 12061

DISPLAY SECTION 12062

INSTRUMENT PANEL 12063

COMMUNICATION NETWORK 12001

DRIVING SYSTEM CONTROL UNIT 12010

BODY SYSTEM CONTROL UNIT 12020

OUTSIDE-VEHICLE INFORMATION DETECTING UNIT 12030

IMAGING SECTION 12031

IN-VEHICLE INFORMATION DETECTING UNIT 12040

DRIVER STATE DETECTING SECTION 12041

# FIG.37

**EP 4 550 818 A1**

## INTERNATIONAL SEARCH REPORT

International application No.

**PCT/JP2023/021836**

### A. CLASSIFICATION OF SUBJECT MATTER

*H04N 23/66*(2023.01)i; *G03B 15/00*(2021.01)i; *G03B 35/08*(2021.01)i; *H04N 23/60*(2023.01)i; *H04N 23/65*(2023.01)i; *H04N 23/743*(2023.01)i

FI: H04N23/66; H04N23/65; H04N23/743; H04N23/60 500; G03B15/00 R; G03B15/00 H; G03B35/08

According to International Patent Classification (IPC) or to both national classification and IPC

### B. FIELDS SEARCHED

Minimum documentation searched (classification system followed by classification symbols)

H04N23/66; G03B15/00; G03B35/08; H04N23/60; H04N23/65; H04N23/743

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-68416 A (RICOH CO LTD) 30 April 2020 (2020-04-30)<br>paragraphs [0063]-[0066], fig. 8 | 1-12 |
| A | JP 2020-537383 A (FACEBOOK TECHNOLOGIES, LLC) 17 December 2020 (2020-12-17)<br>paragraphs [0019]-[0020], fig. 1, 5 | 1-12 |
| A | JP 2020-56953 A (CANON KK) 09 April 2020 (2020-04-09)<br>paragraphs [0043]-[0046], fig. 4 | 1-12 |

☐ Further documents are listed in the continuation of Box C.　　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 July 2023** | **01 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

67

INTERNATIONAL SEARCH REPORT
Information on patent family members

International application No.

**PCT/JP2023/021836**

| Patent document cited in search report | | | Publication date (day/month/year) | Patent family member(s) | | | Publication date (day/month/year) |
|---|---|---|---|---|---|---|---|
| JP | 2020-68416 | A | 30 April 2020 | (Family: none) | | | |
| JP | 2020-537383 | A | 17 December 2020 | US paragraphs [0025]-[0026], fig. 1, 5 WO EP KR CN | 2019/0110039 2019/074503 3467585 10-2020-0055010 111194423 | A1 A1 A1 A A | |
| JP | 2020-56953 | A | 09 April 2020 | US paragraphs [0072]-[0075], fig. 4 | 2020/0112681 | A1 | |

Form PCT/ISA/210 (patent family annex) (January 2015)

**REFERENCES CITED IN THE DESCRIPTION**

**Patent documents cited in the description**

• JP 2018191248 A